# EUROPÄISCHE PATENTSCHRIFT

(11) **EP 3 027 031 B1**
(45) Veröffentlichungstag und Bekanntmachung des Hinweises auf die Patenterteilung: **13.09.2017**
(21) Anmeldenummer: 14742205.9
(22) Anmeldetag: 22.07.2014
(51) Int. Cl.: A21C 15/02

(54) **MASCHINE ZUR HERSTELLUNG VON GEROLLTEN WAFFELTÜTEN**
MACHINE FOR PRODUCING ROLLED WAFER CONES
MACHINE DE PRODUCTION DE CORNETS À GLACE ROULÉS

(30) Priorität: 29.07.2013 AT 6062013
(43) Veröffentlichungstag der Anmeldung: 08.06.2016
(73) Patentinhaber: Haas Food Equipment GmbH, 1210 Wien (AT)
(72) Erfinder: HAAS, Johannes, A-1040 Wien (AT); HAAS, Josef, A-2100 Leobendorf (AT); JIRASCHEK, Stefan, A-2202 Königsbrunn (AT); STILLING, Gottfried, A-1210 Wien (AT)
(74) Vertreter: Puchberger & Partner Patentanwälte
(86) Internationale Anmeldenummer: PCT/EP2014/065701
(87) Internationale Veröffentlichungsnummer: WO 2015/014665

(56) Entgegenhaltungen:
- AT-B- 410 390
- DE-U1-202004 019 511
- US-A- 3 269 335

## Beschreibung

Die Erfindung bezieht sich auf eine Maschine zum Herstellen von gerollten Waffeltüten. Die gerollten Waffeltüten werden in den horizontal ausgerichteten Tütenrollvorrichtungen der Maschine hergestellt. Die Maschine besitzt ein langgestrecktes Maschinengestell, in dem die Tütenrollvorrichtungen längs einer sich in Längsrichtung des Maschinengestells erstreckenden Umlaufbahn hintereinander angeordnet sind. Die Maschine besitzt einen entlang der Umlaufbahn angeordneten, die Tütenrollvorrichtungen tragenden Endlosförderer, der die Tütenrollvorrichtungen entlang der Umlaufbahn von der an der Maschinenoberseite angeordneten Eingabestation zu der an der Maschinenunterseite angeordneten Ausgabestation befördert. Der Endlosförderer besitzt an den Seitenrändern der Umlaufbahn angeordnete Transportketten, an denen die Tragrahmen der Tütenrollvorrichtungen befestigt sind.

Solche Maschinen sind z. B. aus AT 410 390 B und US 6,227,103 B1 bekannt. Gerollte Waffeltüten werden aus flachen Waffelfladen hergestellt. Die gebackenen Waffelfladen sind im gebackenen, heißen Zustand plastisch verformbar. Beim Abkühlen auf Raumtemperatur erstarren die Waffelfladen zu formstabilen, knusprig-spröden Gebilden. Die Waffelfladen werden im heißen, plastisch verformbaren Zustand in die Tütenrollvorrichtungen eingebracht und in den Tütenrollvorrichtungen zu Tüten eingerollt. Die fertigen, heißen und noch plastisch verformbaren Tüten werden aus den Tütenrollvorrichtungen ausgegeben. Beim Abkühlen auf Raumtemperatur erstarren die Tüten zu formstabilen, knusprig-spröden Gebilden.

Die Erfindung schlägt eine neue Maschine der eingangs genannten Art vor. Die neue Maschine ist erfindungsgemäß dadurch gekennzeichnet, dass jede Tütenrollvorrichtung eine mit ihrem Tragrahmen starr verbundene Rollform, einen längs ihrem Tragrahmen verschiebbaren Tütenabstreifer und einen längs ihrem Tragrahmen verschiebbaren Rolldorn besitzt, wobei die Rollform an einem seitlichen Endabschnitt des Tragrahmens angeordnet ist, der Tütenabstreifer auf einem längs dem Tragrahmen verschiebbaren, ersten Schlitten angeordnet ist und der Rolldorn auf einem längs dem Tragrahmen verschiebbaren, zweiten Schlitten angeordnet ist.

Die erfindungsgemäße Maschine sieht horizontal ausgerichtete Tütenrollvorrichtungen vor. Diese besitzen horizontal ausgerichtete Tragrahmen mit denen die horizontal ausgerichteten Rollformen starr verbunden sind. Die Tragrahmen erstrecken sich in Querrichtung des Maschinengestells und sind an den Seitenrändern der Umlaufbahn an den Transportketten des Endlosförderers befestigt. Bei jeder Tütenrollvorrichtung ist die mit dem Tragrahmen starr verbundene Rollform horizontal ausgerichtet und quer zur Umlaufrichtung der Tütenrollvorrichtungen angeordnet. Dadurch befinden sich die in den Tütenrollvorrichtungen unverrückbar angeordneten Rollformen bei Passieren der Eingabestation stets in der gleichen Aufnahmeposition für die Waffelfladen. Durch die in den Tütenrollvorrichtungen unverrückbar angeordneten Rollformen werden beim Einbringen der Waffelfladen in die Rollformen Ausrichtungsfehler der Waffelfladen gegenüber den Rollformen vermieden.

Jede Tütenrollvorrichtung enthält eine im Tragrahmen angeordnete, in Längsrichtung des Tragrahmens auseinanderziehbare und in Längsrichtung des Tragrahmens zusammenschiebbare Rolleinheit. Die Rolleinheit besteht aus der horizontal ausgerichteten Rollform, die mit dem Tragrahmen starr verbunden ist, aus dem im Tragrahmen verschiebbaren Tütenabstreifer, der auf einem in Längsrichtung des Tragrahmens verschiebbaren, ersten Schlitten angeordnet ist, und aus dem im Tragrahmen verschiebbaren, horizontal ausgerichteten Rolldorn, der auf einem in Längsrichtung des Tragrahmens verschiebbaren, zweiten Schlitten angeordnet ist. Die Rolleinheit wird durch Verschieben der beiden Schlitten in Längsrichtung des Tragrahmens zusammengeschoben bzw. auseinandergezogen.

Der Endlosförderer befördert die Tütenrollvorrichtungen entlang der Umlaufbahn von der Eingabestation zur Ausgabestation und wieder zurück zur Eingabestation. Auf dem Weg von der Ausgabestation zur Eingabestation werden in den Tütenrollvorrichtungen die Rolleinheiten in Längsrichtung zusammengeschoben bzw. geschlossen. In der Eingabestation wird bei jeder Tütenrollvorrichtung ein heißer Waffelfladen in die geschlossene Rolleinheit eingebracht und in dieser zwischen Rollform und Rolldorn zu einer Tüte eingerollt. Während des Transports der Tütenrollvorrichtungen von der Eingabestation zur Ausgabestation bleiben die Rolleinheiten geschlossen. In der Ausgabestation wird bei jeder Tütenrollvorrichtung die Rolleinheit mit Hilfe der beiden Schlitten in Längsrichtung auseinandergezogen und die Tüte aus der Rolleinheit ausgegeben. Dabei wird zuerst der Rolldorn mit der auf ihm angeordneten Tüte aus der Rollform herausgezogen und der Tütenabstreifer wird zusammen mit dem Rolldorn nach hinten geschoben. Anschließend wird die Tüte vom Rolldorn durch den Tütenabstreifer abgestreift. Zum Abstreifen der Tüte wird der erste Schlitten gegenüber dem zweite Schlitten nach vorne geschoben oder der zweiter Schlitten wird gegenüber dem erster Schlitten nach hinten geschoben.

Gemäß einem weiteren Merkmal der Erfindung kann vorgesehen sein, dass am zweiten Schlitten eine in einem Lagerbock drehbar gelagerte Rolldornwelle vorgesehen ist, die am vorderen Ende den Rolldorn und am hinteren Ende ein Rolldorn-Antriebsrad trägt.

Bei dieser Ausbildung wird der Rolldorn über das Rolldorn-Antriebsrad in Rotation versetzt. Das Rolldorn-Antriebsrad wird durch eine an der Umlaufbahn der Tütenrollvorrichtungen angeordnete Antriebseinrichtung angetrieben, mit der die Rolldorn-Antriebsräder der Tütenrollvorrichtungen in Eingriff kommen, wenn die Tütenrollvorrichtungen in Längsrichtung der Maschine zur Eingabestation und durch die Eingabestation befördert werden.

Gemäß einem weiteren Merkmal der Erfindung kann vorgesehen sein, dass die Rolldornwelle als axial in sich zusammenschiebbare Rolldornwelle ausgebildet ist, wobei die Rolldornwelle eine das Rolldorn-Antriebsrad tragende, im Lagerbock drehbar aber axial unverschieblich gelagerte äußere Hülse, eine in der äußeren Hülse axial verschiebbare, den Rolldorn tragende, innere Welle und eine die äußere Hülse mit der inneren Welle mechanisch verbindende Polygon-Kupplung umfasst.

Diese Ausbildung der Tütenrollvorrichtungen ist bei der Herstellung von gerollten Waffeltüten von Vorteil, bei denen die während des Rollvorganges übereinandergelegten Teile des Waffelfladens zu einer Vergrößerung der Wandstärke der entstehenden Tüte führen. Dieser Wandstärkenvergrößerung muss der Rolldorn mit einer axialen Rückwärtsbewegung Rechnung tragen. Bei dieser Ausbildung der Tütenrollvorrichtungen ist eine die Rückwärtsbewegung des Rolldorns erzeugende Rückwärtsbewegung des zweiten Schlittens nicht erforderlich. Bei dieser Ausbildung der Tütenrollvorrichtungen nimmt die axial in sich zusammenschiebbare Rolldornwelle die axiale Rückwärtsbewegung des Rolldorns auf. Beim Einrollen des Waffelfladens entsteht in der Rollform eine Vergrößerung der Wandstärke der entstehenden Tüte. Durch diese Wandstärkenvergrößerung wird der Rolldorn axial zurückgeschoben. Dadurch wird die Rolldornwelle axial zusammengeschoben und bei der Polygon-Kupplung werden die beiden Kupplungsabschnitte axial gegeneinander verschoben. Das vom Rolldorn-Antriebsrad in die Rolldornwelle eingebrachte Drehmoment wird während der axialen Verschiebung der beiden Kupplungsabschnitte der Polygon-Kupplung unverändert über die Polygon-Kupplung auf die den Rolldorn tragende, innere Welle der Rolldornwelle übertragen.

Gemäß einem weiteren Merkmal der Erfindung kann vorgesehen sein, dass die Polygon-Kupplung im hinteren Teil der Rolldornwelle angeordnet ist, wobei ein von der inneren Welle gebildeter, innerer Kupplungsabschnitt, der an der Außenseite als Polygonwelle ausgebildet ist, in einem von der äußeren Hülse gebildeten, äußeren Kupplungsabschnitt, der an der Innenseite als Polygonhülse ausgebildet ist, formschlüssig aufgenommen ist.

Bei dieser Ausbildung kann das am hinteren Ende der Rolldornwelle angeordnete Rolldorn-Antriebsrad direkt über der Polygon-Kupplung angeordnet sein. Das Rolldorn-Antriebsrad sitzt dann auf dem äußeren Kupplungsabschnitt der Polygon-Kupplung. Das vom Rolldorn-Antriebsrad in die Rolldornwelle eingebrachte Drehmoment wird in der Polygon-Kupplung vom äußeren Kupplungsabschnitt auf den in diesem formschlüssig aufgenommenen, inneren Kupplungsabschnitt übertragen, der am hinteren Ende der den Rolldorn tragenden, inneren Welle angeordnet ist.

Gemäß einem weiteren Merkmal der Erfindung kann der Rolldorn am zweiten Schlitten federnd abgestützt sein.

Diese Ausbildung ermöglicht es, den Rolldorn während des Rollvorganges mit einem vorgegebenen Federdruck gegen den in der Rollform eingerollten Waffelfladen anzudrücken. Ein weiterer Vorteil besteht darin, dass der Rolldorn nach dem Rollvorgang durch den Federdruck selbsttätig in seine Ausgangsposition zurückkehrt.

Der Rolldorn kann über eine Schraubenfeder an der äußeren Hülse der Rolldornwelle federnd abgestützt sein. Die Schraubenfeder kann zwischen der Rückseite des Rolldorns und dem vorderen Ende der äußeren Hülse der Rolldornwelle angeordnet sein. Die Schraubenfeder kann zwischen einem den Rolldorn tragenden, vorderen Endabschnitt der inneren Welle und dem vorderen Ende der äußeren Hülse der Rolldornwelle angeordnet sein.

Gemäß einem weiteren Merkmal der Erfindung kann vorgesehen sein, dass der den Rolldorn tragende, zweite Schlitten mit einem Mitnehmer versehen ist, der mit einer im Maschinengestell entlang der Umlaufbahn angeordneten Führungseinrichtung in Eingriff bringbar ist, die zusammen mit dem Mitnehmer die Position des zweiten Schlittens in der Tütenrollvorrichtung steuert.

Die im Maschinengestell angeordnete Führungseinrichtung bestimmt über den am zweiten Schlitten angebrachten Mitnehmer die Position des zweiten Schlittens innerhalb der Tütenrollvorrichtung und erzeugt zusammen mit dem Mitnehmer die in Querrichtung des Maschinengestells verlaufenden Schlittenbewegungen des zweiten Schlittens zum Auseinanderziehen bzw. Zusammenschieben der Rolleinheit der Tütenrollvorrichtung.

Gemäß einem weiteren Merkmal der Erfindung kann vorgesehen sein, dass die im Maschinengestell angeordnete Führungseinrichtung zwei zueinander parallele Führungsschienen vorsieht, zwischen denen der am zweiten Schlitten angebrachte Mitnehmer angeordnet ist, dass ein der Eingabestation vorgelagerter Führungsabschnitt vorgesehen ist, der mit im Maschinengestell schräg verlaufenden Führungsschienen versehen ist, die zusammen mit dem am zweiten Schlitten angebrachten Mitnehmer eine den Rolldorn in die Rollform einführende Vorwärtsbewegung des zweiten Schlittens erzeugt, und dass ein im Bereich der Ausgabestation angeordneter Führungsabschnitt vorgesehen ist, der mit im Maschinengestell schräg verlaufenden Führungsschienen versehen ist, die zusammen mit dem am zweiten Schlitten angebrachten Mitnehmer eine den Rolldorn aus der Rollform herausziehende Rückwärtsbewegung des zweiten Schlittens erzeugt.

Bei den Tütenrollvorrichtungen kann gemäß einem weiteren Merkmal der Erfindung vorgesehen sein, dass ein mit dem zweiten Schlitten passiv mitbewegbarer, erster Schlitten vorgesehen ist, dass der erste Schlitten einen vor dem zweiten Schlitten angeordneten, den Tütenabstreifer tragenden, vorderen Schlittenteil und einen hinter dem zweiten Schlitten angeordneten, hinteren Schlittenteil besitzt, dass beim ersten Schlitten der vordere Schlittenteil im Abstand vom hinteren Schlittenteil angeordnet und mit diesem durch eine Distanzstange starr verbunden ist, dass der erste Schlitten durch eine hinter dem zweiten Schlitten angeordnete Schraubenfeder mit dem zweiten Schlitten gekoppelt ist, und dass am hinteren Ende des Tragrahmens ein den Verschiebeweg des ersten Schlittens begrenzender Anschlag angeordnet ist.

Bei dieser Ausbildung wird der mit dem zweiten Schlitten durch die Schraubenfeder gekoppelte, erste Schlitten bei der Vorwärtsbewegung und bei der Rückwärtsbewegung des zweiten Schlittens jeweils ein Stück mitgenommen. Zum Auseinanderziehen und Zusammenschieben der Rolleinheit wird nur der zweiten Schlitten im Tragrahmen der Tütenrollvorrichtung hin und her geschoben.

Bei zusammengeschobener Rolleinheit befinden sich beide Schlitten jeweils in der vorderen Endstellung. Der Tütenabstreifer ist unmittelbar vor der Rollform angeordnet. Der Rolldorn ragt durch den Tütenabstreifer hindurch in die Rollform hinein. Der zweite Schlitten liegt beim ersten Schlitten an der Rückseite des vorderen Schlittenteils an. Die Distanzstange des ersten Schlittens steht über die Rückseite des zweiten Schlittens nach hinten vor. Der hintere Schlittenteil des ersten Schlittens ist mit Abstand hinter dem zweiten Schlitten angeordnet. Die den ersten Schlitten mit dem zweiten Schlitten koppelnde Schraubenfeder ist zwischen dem zweiten Schlitten und dem hinteren Schlittenteil des ersten Schlittens angeordnet. Die Schraubenfeder drückt den ersten Schlitten im Tragrahmen nach hinten und den vorderen Schlittenteil des ersten Schlittens gegen die Vorderseite des zweiten Schlittens.

Zum Auseinanderziehen der Rolleinheit wird der zweite Schlitten aus seiner vorderen Endstellung nach hinten geschoben und bis in seine hintere Endstellung verschoben.

Im ersten Teil der Rückwärtsbewegung des zweiten Schlittens wird der erste Schlitten ebenfalls nach hinten geschoben. Dabei wird der Rolldorn samt der auf ihm angeordneten Tüte aus der Rollform axial herausgezogen und der hinter der Tüte angeordnete Tütenabstreifer wird zusammen mit dem Rolldorn von der Rollform weg nach hinten geschoben. Am Ende des ersten Teils der Rückwärtsbewegung des zweiten Schlittens befindet sich der erste Schlitten in seiner hinteren Endstellung. Der erste Schlitten liegt mit seinem hinteren Schlittenteil gegen den am hinteren Ende des Tragrahmens angeordneten Anschlag an.

Im zweiten Teil der Rückwärtsbewegung des zweiten Schlittens befindet sich der erste Schlitten in seiner hinteren Endstellung und bewegt sich nicht. Der zweite Schlitten wird im Tragrahmen weiter nach hinten verschoben und die durch die Schraubenfeder erzeugte Koppelung mit dem erste Schlitten wird gelöst bzw. aufgehoben. Der zweite Schlitten wird vom vorderen Schlittenteil des ersten Schlittens weg nach hinten verschoben. Die zwischen dem zweiten Schlitten und dem hinteren Schlittenteil des ersten Schlittens angeordnete Schraubenfeder wird axial zusammengedrückt. Der am zweite Schlitten angeordnete Rolldorn wird durch den Tütenabstreifer hindurch nach hinten gezogen und die am Rolldorn angeordnete Tüte wird vom Rolldorn abgestreift.

Zum Zusammenschieben der Rolleinheit wird der zweite Schlitten aus seiner hinteren Endstellung nach vorne geschoben und bis in seine vordere Endstellung verschoben.

Im ersten Teil der Vorwärtsbewegung des zweiten Schlittens befindet sich der erste Schlitten in seiner hinteren Endstellung und bewegt sich nicht. Der zweite Schlitten wird zum vorderen Schlittenteil des ersten Schlittens hin nach vorne geschoben. Dabei wird der Rolldorn durch den Tütenabstreifer hindurch nach vorne geschoben und die Schraubenfeder dehnt sich aus. Im zweiten Teil der Vorwärtsbewegung des zweiten Schlittens wird der erste Schlitten ebenfalls nach vorne geschoben. Dabei wird der Rolldorn und der hinter dem Rolldorn angeordnete Tütenabstreifer nach vorne geschoben und der Rolldorn wird in die Rollform eingeschoben.

Gemäß einem weiteren Merkmal der Erfindung kann vorgesehen sein, dass ein mit dem zweiten Schlitten passiv mitbewegbarer, erster Schlitten vorgesehen ist, dass der erste Schlitten einen vor dem zweiten Schlitten angeordneten, den Tütenabstreifer tragenden, vorderen Schlittenteil und einen hinter dem zweiten Schlitten angeordneten, hinteren Schlittenteil besitzt, dass beim ersten Schlitten der vordere Schlittenteil im Abstand vom hinteren Schlittenteil angeordnet und mit diesem durch eine Distanzstange starr verbunden ist, dass der erste Schlitten über eine lösbares Bindeglied mit dem zweiten Schlitten gekoppelt ist, und dass am hinteren Ende des Tragrahmens ein den Verschiebeweg des erste Schlittens begrenzender Anschlag angeordnet ist.

Bei dieser Ausbildung wird der mit dem zweiten Schlitten durch das lösbare Bindeglied gekoppelte, erste Schlitten bei der Vorwärtsbewegung und bei der Rückwärtsbewegung des zweiten Schlittens jeweils ein Stück mitgenommen. Zum Auseinanderziehen und Zusammenschieben der Rolleinheit wird nur der zweiten Schlitten im Tragrahmen der Tütenrollvorrichtung hin und her geschoben.

Zum Auseinanderziehen der Rolleinheit wird der zweite Schlitten von der Rollform weg nach hinten geschoben und bis in seine hintere Endstellung verschoben.

Im ersten Teil der Rückwärtsbewegung des zweiten Schlittens wird der durch das Bindeglied mit dem zweiten Schlitten gekoppelte, erste Schlitten ebenfalls nach hinten geschoben. Dabei wird der eine Tüte tragende Rolldorn vollständig aus der Rollform herausgezogen und der hinter der Tüte angeordnete Tütenabstreifer wird zusammen mit dem Rolldorn von der Rollform weg nach hinten geschoben. Am Ende des ersten Teiles der Rückwärtsbewegung des zweiten Schlittens stößt der erste Schlitten mit seinem hinteren Schlittenteil gegen den am hinteren Ende des Tragrahmens angeordneten Anschlag. Dadurch wird die Rückwärtsbewegung des ersten Schlittens gestoppt.

Im zweiten Teil der Rückwärtsbewegung des zweiten Schlittens liegt der erste Schlitten mit seinem hinteren Schlittenteil an dem am hinteren Ende des Tragrahmens angeordneten Anschlag an und bewegt sich nicht. Der zweite Schlitten wird im Tragrahmen weiter nach hinten verschoben und das Bindeglied wird durch die Rückwärtsbewegung des zweiten Schlittens gelöst. Es bewegt sich nur mehr der zweite Schlitten nach hinten. Der am zweiten Schlitten angeordnete Rolldorn wird durch den Tütenabstreifer hindurch nach hinten gezogen und die am Rolldorn angeordnete Tüte wird vom Rolldorn abgestreift.

Zum Zusammenschieben der Rolleinheit wird der zweite Schlitten im Tragrahmen der Tütenrollvorrichtung nach vorne geschoben. Der zweite Schlitten wird von seiner hinteren Endstellung nach vorne geschoben bis in seine vordere Endstellung.

Im ersten Teil der Vorwärtsbewegung des zweiten Schlittens befindet sich der erste Schlitten in seiner hinteren Endstellung und bewegt sich nicht. Der zweite Schlitten wird bis zum vorderen Schlittenteil des ersten Schlittens nach vorne geschoben. Dabei wird der Rolldorn durch den Tütenabstreifer hindurch nach vorne geschoben. Im zweiten Teil der Vorwärtsbewegung des zweiten Schlittens wird der erste Schlitten ebenfalls nach vorne geschoben. Dabei wird der Rolldorn und der hinter dem Rolldorn angeordnete Tütenabstreifer nach vorne geschoben und der Rolldorn wird in die Rollform eingeschoben.

Gemäß einem weiteren Merkmal der Erfindung kann vorgesehen sein, dass der erste Schlitten über ein lösbares Bindeglied mit dem zweiten Schlitten gekoppelt ist, wobei das Bindeglied aus einem an der Vorderseite des zweiten Schlittens angebrachten Magneten und einem an der Rückseite des vorderen Schlittenteils des ersten Schlittens angebrachten Gegenstück besteht.

Nachstehend wird die Erfindung anhand der Zeichnungen näher erläuterten. In den Zeichnungen zeigen:
Fig. 1 zeigt eine erfindungsgemäßen Maschine in Seitenansicht,
Fig. 2 zeigt die Maschine der Fig. 1 von oben,
Fig. 3 zeigt die Maschine der Fig. 1 von unten,
Fig. 4 zeigt eine Stirnansicht der Maschine der Fig. 1,
Fig. 5 zeigt eine Tütenrollvorrichtung mit auseinandergezogener Rolleinheit, in Fig. 5a von der Seite, in Fig. 5b im Längsschnitt und in Fig. 5c von oben,
Fig. 6 zeigt die Tütenrollvorrichtung der Fig. 5 mit geschlossener Rolleinheit, in Fig. 6a von der Seite, in Fig. 6b im Längsschnitt und in Fig. 6c von oben,
Fig. 7 zeigt eine weitere Tütenrollvorrichtung mit auseinandergezogener Rolleinheit, in Fig. 7a von der Seite, in Fig. 7b im Längsschnitt und in Fig. 7c von oben,
Fig. 8 zeigt die Tütenrollvorrichtung der Fig. 7 mit geschlossener Rolleinheit, in Fig. 8a von der Seite, in Fig. 8b im Längsschnitt und in Fig. 8c von oben,
Fig. 9 zeigt eine geschlossene Rolleinheit einer Tütenrollvorrichtung im Längsschnitt, und
Fig. 10 zeigt, in einer Seitenansicht, ein Maschinengestell mit einer entlang der Umlaufbahn der Tütenrollvorrichtungen angeordneten, den zweiten Schlitten der Tütenrollvorrichtungen zugeordneten Führungseinrichtung ,
Fig. 11 zeigt das Maschinengestell der Fig. 10 von oben, und
Fig. 12 zeigt das Maschinengestell der Fig. 10 von unten.

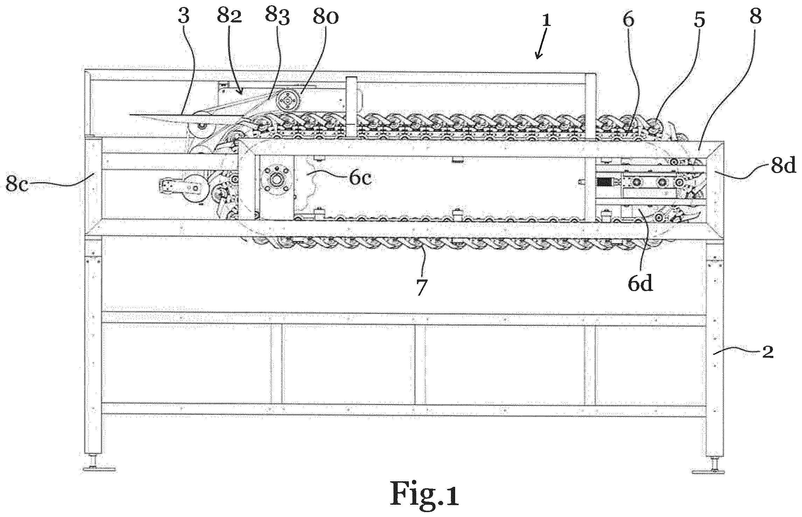

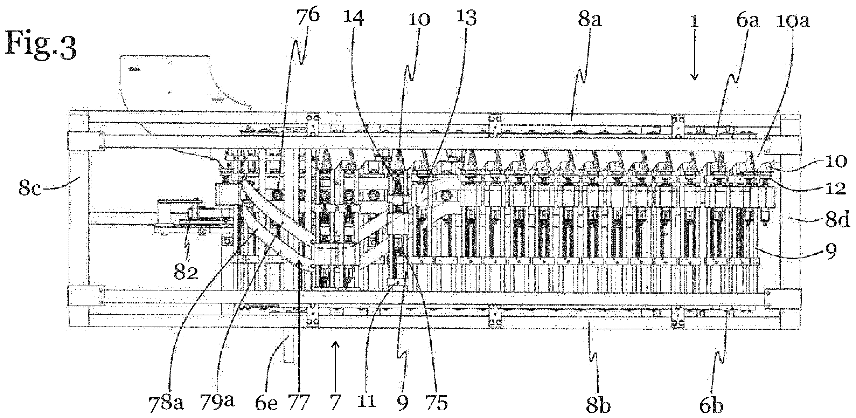

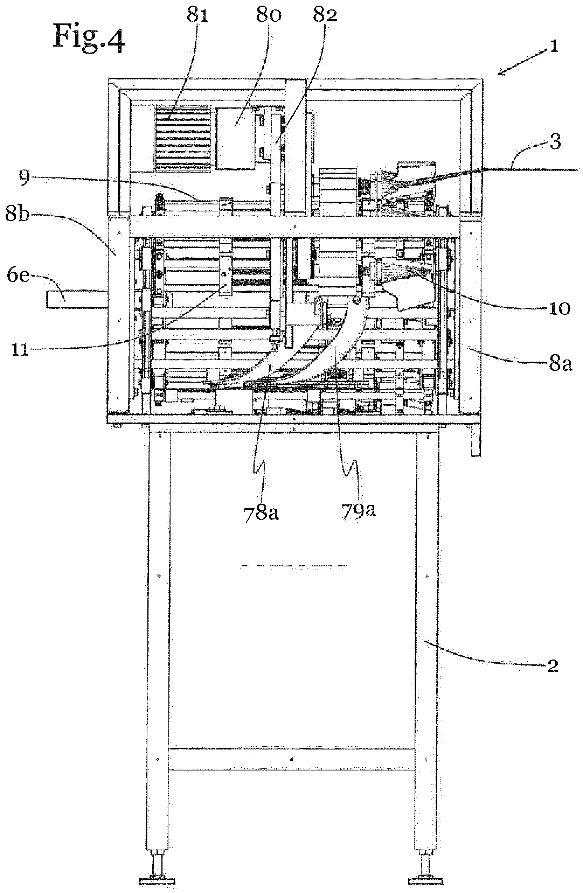

Die Fig. 1-4 zeigen eine Maschine 1 zum Herstellen von gerollten Waffeltüten. Die Maschine 1 ist auf einem Untergestell 2 angeordnet. Im Untergestell 2 ist eine die Waffeltüten abtransportierende (nicht dargestellte) Fördereinrichtung angeordnet.

Die Maschine 1 besitzt eine an der Oberseite angeordnete Eingabestation 3, in der die einzurollenden Waffelfladen 4 in die in der Maschine 1 umlaufenden Tütenrollvorrichtungen 5 eingebracht werden. Die Tütenrollvorrichtungen 5 sind entlang einer sich in Längsrichtung der Maschine 1 erstreckenden Umlaufbahn hintereinander angeordnet und werden vom Endlosförderer 6 der Maschine 1 längs dieser Umlaufbahn durch die Maschine 1 bewegt. Die Waffelfladen 4 werden in den Tütenrollvorrichtungen 5 zu Tüten eingerollt. Die in den Tütenrollvorrichtungen 5 entstandenen, gerollten Waffeltüten werden an der Ausgabestation 7 der Maschine 1 ausgegeben. Die Ausgabestation 7 ist an der Unterseite der Maschine 1 angeordnet. Die Waffeltüten fallen nach unten aus der Maschine 1 und auf die im Untergestell 2 angeordnete Fördereinrichtung.

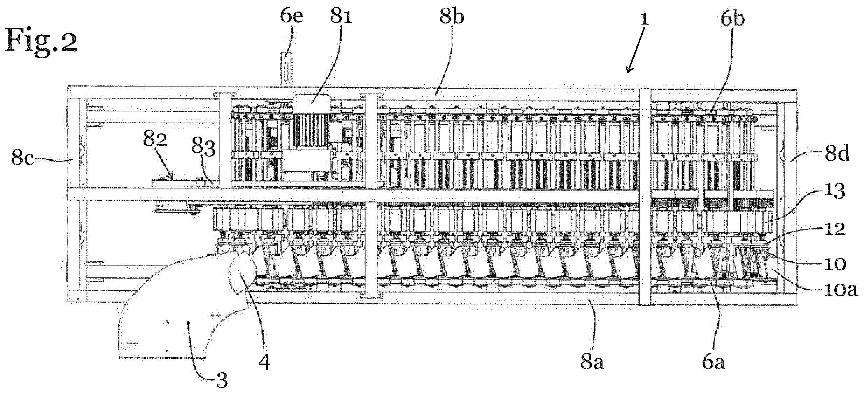

Maschine 1 besitzt ein langgestrecktes Maschinengestell 8 mit einer vorderen Seitenwand 8a, einer hinteren Seitenwand 8b, einer linken Endwand 8c und einer rechten Endwand 8d (Fig. 2). Das Maschinengestell 8 sitzt auf dem Untergestell 2.

In dem Maschinengestell 8 ist die Umlaufbahn der Tütenrollvorrichtungen 5 angeordnet. Die Umlaufbahn umfasst zwei sich in Längsrichtung der Maschine 1 erstreckende, übereinander angeordnete, horizontale Bahnabschnitte, die durch zwei halbkreisförmige Bahnabschnitte miteinander verbunden sind.

Die Tütenrollvorrichtungen 5 werden vom Endlosförderer 6 in Längsrichtung des Maschinengestells 8 durch die Umlaufbahn befördert. Die langgestreckten Tütenrollvorrichtungen 5 sind horizontal ausgerichtet und quer zur Umlaufrichtung angeordnet.

Der Endlosförderer 6 besitzt zwei endlose Transportketten 6a, 6b, die sich entlang der Umlaufbahn erstrecken und an den beiden Seitenrändern der Umlaufbahn angeordnet sind. Die Tütenrollvorrichtungen 5 sind zwischen den beiden Transportketten 6a, 6b, angeordnet. Die vorderen Enden der Tütenrollvorrichtungen 5 sind an der vorderen Transportkette 6a befestigt, die der vorderen Seitenwand 8a des Maschinengestells 8 benachbart angeordnet ist. Die hinteren Enden der Tütenrollvorrichtungen 5 sind an der hinteren Transportkette 6b befestigt, die der hinteren Seitenwand 8b des Maschinengestells 8 benachbart angeordnet ist.

Die beiden Transportketten 6a, 6b laufen an den Enden des Endlosförderers 6 über Umlenkräder 6c und 6d. Die halbkreisförmigen Bahnabschnitte der Umlaufbahn sind entlang diesen Umlenkrädern 6c und 6d angeordnet. Der Endlosförderer 6 wird über die beiden an seinem vorderen Ende angeordneten Kettenumlenkräder 6c angetrieben. Die Kettenumlenkräder 6c sind über eine horizontale Antriebswelle 6e mit dem (nicht dargestellten) Antriebsmotor des Endlosförderers 6 verbunden.

Jede Tütenrollvorrichtung 5 besitzt einen langgestreckten Tragrahmen 9, der sich in Querrichtung des Maschinengestells 8 erstreckt. Die Rollform 10 der Tütenrollvorrichtung 5 ist dem vorderen Ende des Tragrahmens 9 benachbart angeordnet und mit dem Tragrahmen 9 starr verbunden. Die Rollform 10 besitzt einen seitlichen Einführschlitz für die Waffelfladen. An der Außenseite der Rollform 10 ist eine schräg stehende Platte 10a angebracht, auf der die Waffelfladen in den Einführschlitz gleiten. Auf dem Tragrahmen 9 ist ein längs dem Tragrahmen 9 verschiebbarer, erster Schlitten 11 angeordnet, der den Tütenabstreifer 12 der Tütenrollvorrichtung 5 trägt. Auf dem Tragrahmen 9 ist ein längs dem Tragrahmen 9 verschiebbarer, zweiter Schlitten 13 angeordnet, der den Rolldorn 14 der Tütenrollvorrichtung 5 trägt.

Die mit dem Tragrahmen 9 starr verbundene Rollform 10 bildet zusammen mit dem am ersten Schlitten 11 angeordneten Tütenabstreifer 12 und zusammen dem am zweiten Schlitten 13 angeordneten Rolldorn 14 die Rolleinheit der Tütenrollvorrichtung 5.

Die Rolleinheit wird in Längsrichtung des Tragrahmens 9 zusammengeschoben bzw. geschlossen, um in der geschlossenen Rolleinheit einen Waffelfladen zu einer Tüte einrollen zu können. Dazu werden beide Schlitten 11 und 13 zu der mit dem Tragrahmen 9 starr verbundenen Rollform 10 geschoben.

Bei geschlossener Rolleinheit wird ein Waffelfladen in die Rollform 10 eingeführt. Der Waffelfladen wird über die schräg stehende Platte 10a in den seitlichen Einführschlitz der Rollform 10 eingeführt. Der Waffelfladen wird in den zwischen der konischen Innenseite der Rollform 10 und der konischen Außenseite des Rolldorns 14 angeordneten Hohlraum eingeführt und in diesem Hohlraum zu einer Tüte eingerollt.

Zum Ausgeben der Tüte aus der geschlossenen Rolleinheit wird die Rolleinheit in Längsrichtung des Tragrahmens 9 auseinandergezogen. Dabei wird zuerst der Rolldorn 14 samt Tüte aus der Rollform 10 herausgezogen. Anschließend wird die Tüte durch den Tütenabstreifer 12 vom Rolldorn 14 abgestreift. Zum Herausziehen der Tüte aus der Rollform 10 werden beide Schlitten 11, 13 von der Rollform 10 weggeschoben. Das Abstreifen der Tür geschieht während einer Relativbewegung der beiden Schlitten 11, 13. Nach dem Ausgeben der Tüte wird die Rolleinheit wieder in Längsrichtung des Tragrahmens 9 zusammengeschoben bzw. geschlossen.

Die Tütenrollvorrichtung 5 wird mit geschlossener Rolleinheit zur Eingabestation 3 der Maschine 1 befördert. An der Eingabestation 3 wird ein Waffelfladen in die Rollform 10 eingeführt und zu einer Tüte eingerollt. Die Tütenrollvorrichtung 5 wird mit geschlossener Rolleinheit durch den oberen, horizontalen Bahnabschnitt der Umlaufbahn befördert (Fig. 1). Am hinteren Ende des Endlosförderers 6 wird die Tütenrollvorrichtung 5 mit geschlossener Rolleinheit durch den hinteren, halbkreisförmigen Bahnabschnitt der Umlaufbahn in den unteren, horizontalen Bahnabschnitt der Umlaufbahn befördert. Beim Passieren der Ausgabestation 7 wird die Rolleinheit der Tütenrollvorrichtung 5 zuerst in Längsrichtung des Tragrahmens 9 auseinandergezogen und dann wieder in Längsrichtung des Tragrahmens 9 zusammengeschoben (Fig. 2). Während des Auseinanderziehens der Rolleinheit wird die Tüte aus der Tütenrollvorrichtung 5 ausgegeben.

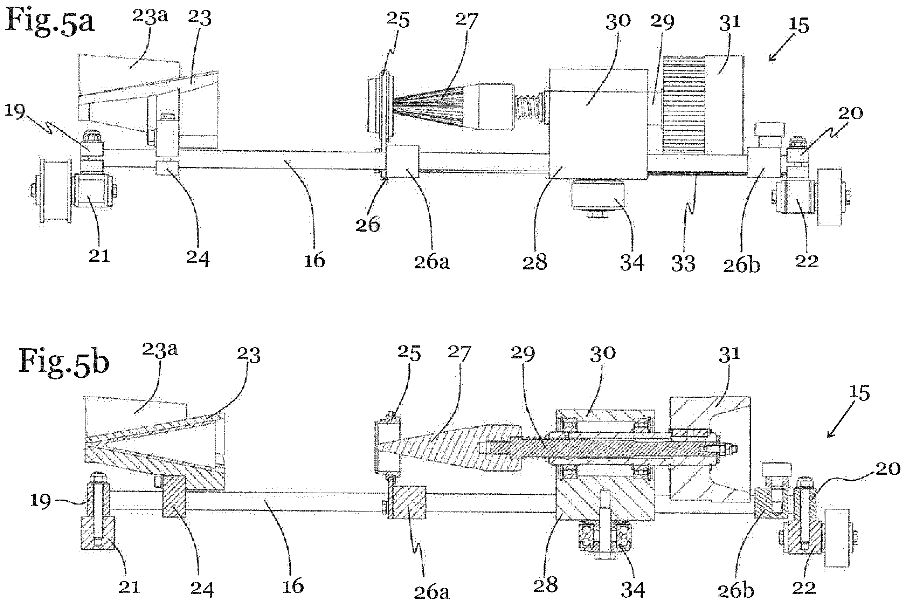

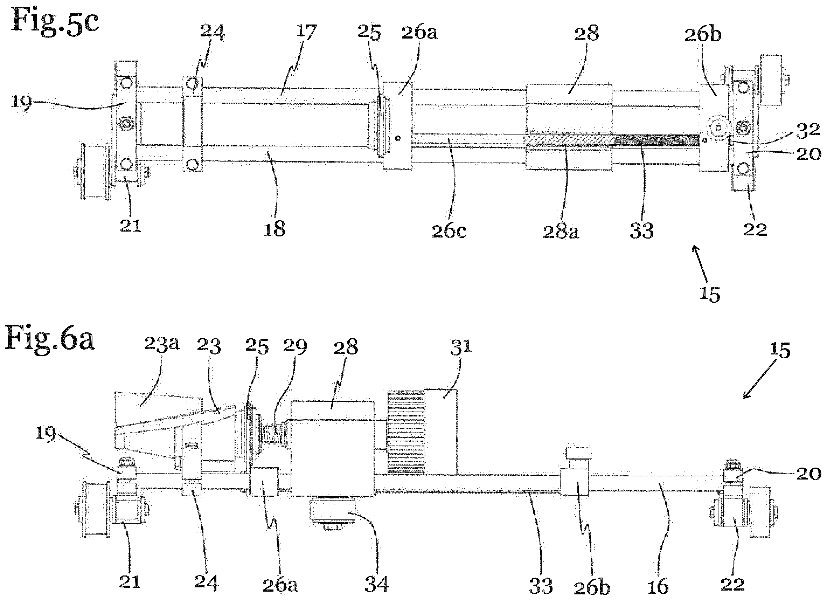

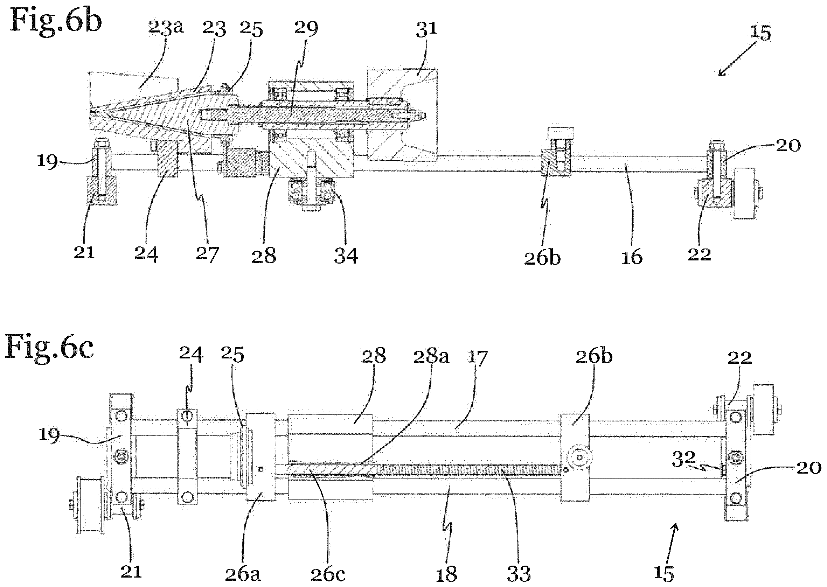

Fig. 5 zeigt eine langgestreckte, horizontal ausgerichtete Tütenrollvorrichtung 15 mit einer in Längsrichtung auseinandergezogenen Rolleinheit. Die Fig. 6 zeigt die Tütenrollvorrichtung 15 mit in Längsrichtung zusammengeschobener Rolleinheit.

Die Tütenrollvorrichtung 15 besitzt einen langgestreckten Tragrahmen 16, der horizontal ausgerichtet ist und sich über die gesamte Länge der Tütenrollvorrichtung 15 erstreckt. Der Tragrahmen 16 besitzt zwei langgestreckte horizontale Stäbe 17, 18, die nebeneinander angeordnet und am vorderen Ende des Tragrahmens 16 und am hinteren Ende des Tragrahmens 16 durch Querstücke 19, 20 miteinander verbunden sind.

Die Tütenrollvorrichtung 15 ist zwischen den beiden Transportketten 21, 22 eines Endlosförderers angeordnet. Der Tragrahmen 16 ist mit dem an seinem vorderen Ende angeordneten, ersten Querstück 19 an einem Kettenglied der Transportkette 21 befestigt und mit dem an seinem hinteren Ende angeordneten, zweiten Querstück 20 an einem Kettenglied der Transportkette 22 befestigt.

Der Tragrahmen 16 trägt die Rolleinheit der Tütenrollvorrichtung 15.

Die Rolleinheit sieht eine horizontal ausgerichtete Rollform 23 vor, die am vorderen Ende der Tütenrollvorrichtung 15 angeordnet ist. Die Rollform 23 ist an einem Querstück 24 des Tragrahmens 16 befestigt, das im Abstand vom vorderen Ende der Tütenrollvorrichtung 15 angeordnet und mit den beiden Stäben 17, 18 des Tragrahmens 16 starr verbunden ist. Die Rollform 23 ist mit einem (nicht dargestellten) seitlichen Einführschlitz für die Waffelfladen versehen. An der oberen Hälfte der Rollform 23 ist eine schräg stehende Platte 23a angebracht. Die Platte 23a bildet eine Gleitbahn für die durch den Einführschlitz hindurch in die Rollform 23 einzuführenden Waffelfladen.

Die Rolleinheit sieht einen der Rollform 23 vorgelagerten Tütenabstreifer 25 vor. Dieser ist auf einem ersten Schlitten 26 angeordnet, der auf den Stäben 17, 18 des Tragrahmens 16 sitzt und längs den Stäben 17, 18 in Längsrichtung des Tragrahmens 16 verschiebbar ist

Die Rolleinheit sieht einen horizontal ausgerichteten, in die Rollform 23 einführbaren Rolldorn 27 vor. Dieser ist auf einem zweiten Schlitten 28 angeordnet, der auf den Stäben 17, 18 des Tragrahmens 16 sitzt und längs den Stäben 17, 18 in Längsrichtung des Tragrahmens 16 verschiebbar ist. Der Rolldorn 27 ist am vorderen Ende einer Rolldornwelle 29 angebracht, die in einem am zweiten Schlitten 28 angeordneten Lagerbock 30 drehbar gelagert ist. Am hinteren Ende der Rolldornwelle 29 ist ein Rolldorn-Antriebsrad 31 angeordnet.

Der Tütenabstreifer 25 ist auf einem vorderen Schlittenteil 26a des ersten Schlittens 26 angeordnet. Der erste Schlitten 26 besitzt einen mit Abstand vom vorderen Schlittenteil 26a angeordneten, hinteren Schlittenteil 26b, der durch eine lange horizontale Distanzstange 26c mit dem vorderen Schlittenteil 26a starr verbunden ist.

Der erste Schlitten 26 ist zwischen einer der Rollform 23 benachbarten, vorderen Endstellung (Fig. 6) und einer dem hinteren Ende der Tütenrollvorrichtung 15 benachbarten, hinteren Endstellung (Fig. 5) verschiebbar. In der hinteren Endstellung liegt der erste Schlitten 26 mit dem hinteren Schlittenteil 26b an einem Anschlag 32 an, der am hinteren Ende der Tütenrollvorrichtung 15 angeordnet und am zweiten Querstück 20 des Tragrahmens 16 angebracht ist.

Der vordere Schlittenteil 26a des ersten Schlittens 26 ist auf den Stäben 17, 18 des Tragrahmens 16 vor dem zweiten Schlitten 28 angeordnet und der hintere Schlittenteil 26b des ersten Schlittens 26 ist auf den Stäben 17, 18 hinter dem zweiten Schlitten 28 angeordnet. Beim ersten Schlitten 26 ist der Abstand der beiden Schlittenteile 26a und 26b und die Länge der Distanzstange 26c etwa dreimal so groß wie die Länge des zweiten Schlittens 28. Im zweiten Schlitten 28 ist eine horizontale Längsbohrung 28a vorgesehen, in der die Distanzstange 26c des ersten Schlittens 26 angeordnet ist.

Der erste Schlitten 26 ist mit dem zweiten Schlitten 28 durch eine hinter dem zweiten Schlitten 28 angeordnete Schraubenfeder 33 gekoppelt. Die Schraubenfeder 33 ist auf der Distanzstange 26c des ersten Schlittens 26 angeordnet. Die Schraubenfeder 33 ist an der Rückseite des zweiten Schlittens 28 und an der Vorderseite des hinteren Schlittenteils 26b des ersten Schlittens 26 abgestützt. Diese Koppelung erzeugt eine steife Verbindung des ersten Schlittens 26 mit dem zweiten Schlitten 28. Der erste Schlitten 26 macht jede Vorwärtsbewegung und Rückwärtsbewegung des zweiten Schlittens 28 mit, solange der erste Schlitten 26 nicht bei einer Rückwärtsbewegung seine hintere Endstellung erreicht und mit dem hinteren Schlittenteil 26b am hinteren Ende der Tütenrollvorrichtung 15 am Anschlag 32 anliegt. Wenn der erste Schlitten 26 gegen den Anschlag 32 anliegt und der zweite Schlitten 28 im Tragrahmen 16 weiter nach hinten geschoben wird, dann bewegt sich der zweite Schlitten 28 vom vorderen Schlittenteil 26a des ersten Schlittens 26 weg nach hinten, die Schraubenfeder 33 wird axial zusammengedrückt und die Koppelung zwischen dem ersten Schlitten 26 und dem zweiten Schlitten 28 wird aufgelöst. Bei der Vorwärtsbewegung des zweiten Schlittens 28 wird diese Koppelung wieder hergestellt, wenn der zweite Schlitten 28 von hinten gegen den vorderen Schlittenteil 26a des ersten Schlittens 26 stößt und den ersten Schlitten 26 vom Anschlag 32 weg nach vorne schiebt.

Der zweite Schlitten 28 trägt an seiner Unterseite einen Mitnehmer 34.

Fig. 5 zeigt die Tütenrollvorrichtung 15 mit in Längsrichtung auseinandergezogener Rolleinheit. Der erste Schlitten 26 befindet sich in seiner hinteren Endstellung. Der erste Schlitten 26 liegt mit dem hinteren Schlittenteil 26b am hinteren Ende der Tütenrollvorrichtung 15 am Anschlag 32 an. Der zweite Schlitten 28 befindet sich ebenfalls in seiner hinteren Endstellung und ist weit hinter dem vorderen Schlittenteil 26a des ersten Schlittens 26 angeordnet. Der am zweiten Schlitten 28 angeordnete Rolldorn 27 ist hinter dem am vorderen Schlittenteil 26a des ersten Schlittens 26 angeordneten Tütenabstreifer 25 angeordnet.

Zum Zusammenschieben der Rolleinheit wird der zweite Schlitten 28 im Tragrahmen 16 nach vorne geschoben.

Im ersten Teil seiner Vorwärtsbewegung wird der zweite Schlitten 28 zum vorderen Schlittenteil 26a des ersten Schlittens 26 nach vorne geschoben. Dabei wird der Rolldorn 27 durch den Tütenabstreifer 25 hindurch nach vorne geschoben und die Koppelung zwischen erstem Schlitten 26 und zweitem Schlitten 28 hergestellt.

Im zweiten Teil seiner Vorwärtsbewegung wird der zweite Schlitten 28 zusammen mit dem mit ihm gekoppelten ersten Schlitten 26 weiter nach vorne geschoben. Dabei wird der über den Tütenabstreifer 25 nach vorne vorstehende Rolldorn 27 in die Rollform 23 eingeschoben.

Fig. 6 zeigt die Tütenrollvorrichtung 15 mit in Längsrichtung zusammengeschobener Rolleinheit. Der erste Schlitten 26 befindet sich in seiner vorderen Endstellung. Der Tütenabstreifer 25 ist vor der Rollform 23 angeordnet. Der zweite Schlitten 28 befindet sich ebenfalls in seiner vorderen Endstellung. Der Rolldorn 27 ragt durch den Tütenabstreifer 25 hindurch in die Rollform 23 hinein. Auf dem Rolldorn 27 ist die in der Rollform 23 entstandene Tüte angeordnet. Der Tütenabstreifer 25 ist hinter der Tüte angeordnet. Der erste Schlitten 26 ist mit dem zweiten Schlitten 28 durch die Schraubenfeder 33 gekoppelt.

Zum Auseinanderziehen der Rolleinheit wird der zweite Schlitten 28 im Tragrahmen 16 nach hinten geschoben.

Im ersten Teil seiner Rückwärtsbewegung nimmt der zweite Schlitten 28 den mit ihm gekoppelten, ersten Schlitten 26 mit. Beide Schlitten 26 und 28 werden gemeinsam nach hinten geschoben. Der Rolldorn 27 wird samt der Tüte vollständig aus der Rollform 23 herausgezogen und der Tütenabstreifer 25 bleibt in seiner Position hinter der Tüte.

Am Beginn des zweiten Teiles der Rückwärtsbewegung des zweiten Schlittens 28 stößt der vom zweiten Schlitten 28 nach hinten geschobene, erste Schlitten 26 mit seinem hinteren Schlittenteil 26b gegen den am hinteren Ende der Tütenrollvorrichtung 15 angeordneten Anschlag 32. Dadurch wird der erste Schlitten 26 in der Tütenrollvorrichtung 15 still gesetzt und die Koppelung zwischen dem ersten Schlitten 26 und dem zweiten Schlitten 28 wird aufgehoben bzw. gelöst und die Schraubenfeder 33 wird axial zusammengedrückt.

Im zweiten Teil seiner Rückwärtsbewegung bewegt sich der zweite Schlitten 28 von dem vorderen Schlittenteil 26a des ersten Schlittens 26 weg nach hinten zu dem hinteren Schlittenteil 26b des ersten Schlittens 26. Dabei wird der Rolldorn 27 durch den hinter der Tüte angeordneten Tütenabstreifer 25 hindurch nach hinten gezogen und der Tütenabstreifer 25 streift die Tüte vom Rolldorn 27 ab. Die Tüte fällt nach unten aus der Tütenrollvorrichtung 15.

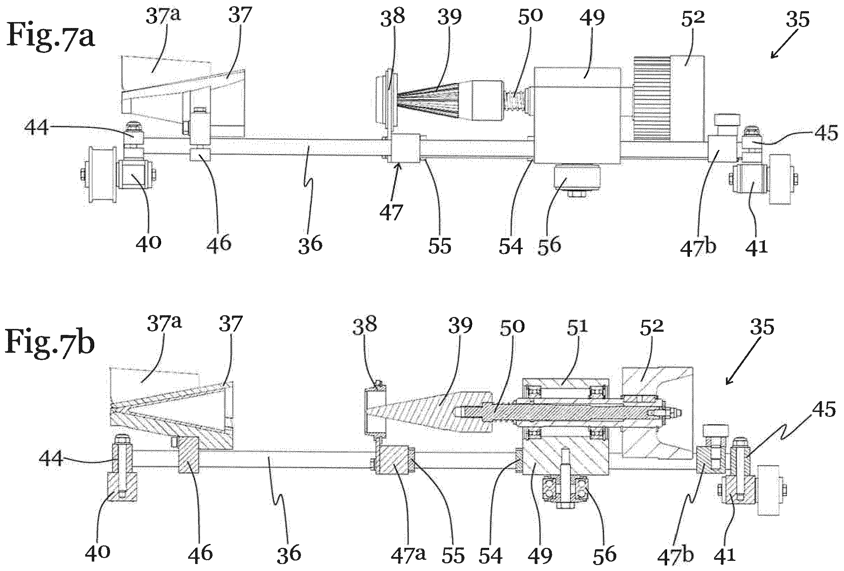

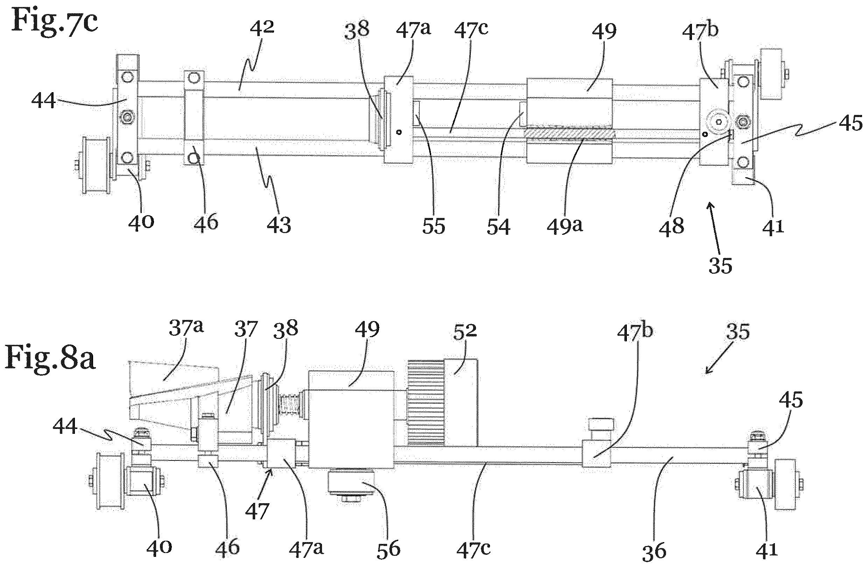

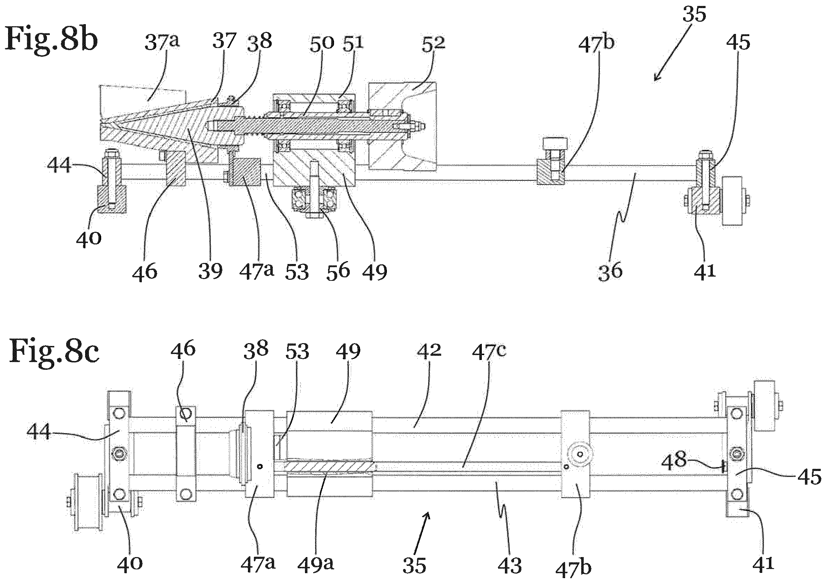

Fig. 7 zeigt eine weitere Tütenrollvorrichtung 35 mit auseinandergezogener Rolleinheit. Fig. 8 zeigt die Tütenrollvorrichtung 35 der Fig. 7 mit zusammengeschobener Rolleinheit.

Die Tütenrollvorrichtung 35 ist horizontal ausgerichtet. Sie besitzt einen langgestreckten, horizontal ausgerichteten Tragrahmen 36, der sich über die gesamte Länge der Tütenrollvorrichtung 35 erstreckt. Der Tragrahmen 36 trägt die aus Rollform 37, Tütenabstreifer 38 und Rolldorn 39 bestehende Rolleinheit der Tütenrollvorrichtung 35.

Die Tütenrollvorrichtung 35 ist zwischen den beiden Transportketten 40, 41 eines Endlosförderers angeordnet und mit ihrem Tragrahmen 36 an den beiden Transportketten 40, 41 befestigt.

Der Tragrahmen 36 sieht zwei nebeneinander angeordnete, langgestreckte, horizontale Stäbe 42, 43 vor, die an beiden Enden des Tragrahmens 36 durch zwei Querstücke 44, 45 starr miteinander verbunden sind. Das am vorderen Ende des Tragrahmens 36 angeordnete, erste Querstück 44 ist an einem Kettenglied der Transportkette 40 befestigt und das am hinteren Ende des Tragrahmens 36 angeordnete, zweite Querstück 45 ist an einem Kettenglied der Transportkette 41 befestigt.

Die horizontal ausgerichtete Rollform 37 ist an einem dritten Querstück 46 des Tragrahmens 36 befestigt, das im Abstand vom vorderen Ende der Tütenrollvorrichtung 35 angeordnet und mit den beiden Stäben 42, 43 des Tragrahmens 36 starr verbunden ist. Die Rollform 37 ist mit einem (nicht dargestellten) seitlichen Einführschlitz für die Waffelfladen versehen. An der oberen Hälfte der Rollform 37 ist eine schräg stehende Platte 37a angebracht. Die Platte 37a bildet eine Gleitbahn für die durch den Einführschlitz hindurch in die Rollform 37 einzuführenden Waffelfladen.

Der Tütenabstreifer 38 ist auf einem ersten Schlitten 47 angeordnet, der auf den Stäben 42, 43 des Tragrahmens 36 sitzt und längs den Stäben 42, 43 in Längsrichtung des Tragrahmens 36 verschiebbar ist. Der Tütenabstreifer 38 ist auf dem vorderen Schlittenteil 47a des ersten Schlittens 47 angeordnet. Der erste Schlitten 47 besitzt eine mit Abstand vom vorderen Schlittenteil 47a angeordneten, hinteren Schlittenteil 47b, der durch eine lange horizontale Distanzstange 47c mit dem vorderen Schlittenteil 47a starr verbunden ist. Der erste Schlitten 47 ist zwischen einer der Rollform 37 benachbarten, vorderen Endstellung (Fig. 8) und einer dem hinteren Ende der Tütenrollvorrichtung 35 benachbarten, hinteren Endstellung (Fig. 7) verschiebbar. In der hinteren Endstellung liegt der erste Schlitten 47 mit dem hinteren Schlittenteil 47b an einem Anschlag 48 an, der am hinteren Ende der Tütenrollvorrichtung 35 angeordnet und am zweiten Querstück 45 des Tragrahmens 36 angebracht ist.

Der horizontal ausgerichtete Rolldorn 39 ist auf einem zweiten Schlitten 49 angeordnet, der auf den Stäben 42, 43 des Tragrahmens 36 sitzt und längs den Stäben 42, 43 in Längsrichtung des Tragrahmens 36 verschiebbar ist. Der Rolldorn 39 ist am vorderen Ende einer Rolldornwelle 50 angebracht, die in einem am zweiten Schlitten 49 angeordneten Lagerbock 51 drehbar gelagert ist. Am hinteren Ende der Rolldornwelle 50 ist ein Rolldorn-Antriebsrad 52 angeordnet.

Der vordere Schlittenteil 47a des ersten Schlittens 47 ist auf den Stäben 42, 43 des Tragrahmens 36 vor dem zweiten Schlitten 49 angeordnet und der hintere Schlittenteil 47b des ersten Schlittens 47 ist auf den Stäben 42, 43 hinter dem zweiten Schlitten 49 angeordnet. Beim ersten Schlitten 47 ist der Abstand der beiden Schlittenteile 47a und 47b und die Länge der Distanzstange 47c etwa dreimal so groß wie die Länge des zweiten Schlittens 49. Im zweiten Schlitten 49 ist eine horizontale Längsbohrung 49a vorgesehen, in der die Distanzstange 47c des ersten Schlittens 47 angeordnet ist.

Zwischen dem vorderen Schlittenteil 47a des ersten Schlittens 47 und dem zweiten Schlitten 49 ist ein lösbares Bindeglied 53 angeordnet. Das Bindeglied 53 besteht aus einem Magneten 54 und einem Gegenstück 55. Der Magnet 54 ist an der Vorderseite des zweiten Schlittens 49 angebracht. Das Gegenstück 55 ist an der Rückseite des vorderen Schlittenteils 47a des ersten Schlittens 47 angebracht.

Wenn der zweite Schlitten 49 am vorderen Schlittenteil 47a des ersten Schlittens 47 anliegt, dann ist das Bindeglied 53 geschlossen und der erste Schlitten 47 ist mit dem zweiten Schlitten 49 gekoppelt. Der erste Schlitten 47 macht jede Vorwärtsbewegung und Rückwärtsbewegung des zweiten Schlittens 49 mit, solange das Bindeglied 53 geschlossen ist. Wenn sich der erste Schlitten 47 in seiner hinteren Endstellung befindet und der zweite Schlitten 49 im Tragrahmen 36 weiter nach hinten geschoben wird, dann bewegt sich der zweite Schlitten 49 vom vorderen Schlittenteil 47a des ersten Schlittens 47 weg nach hinten und das Bindeglied 53 wird gelöst. Wenn der zweite Schlitten 49 von hinten gegen den vorderen Schlittenteil 47a des ersten Schlittens 47 stößt, wird das Bindeglied 53 wieder geschlossen.

Der zweite Schlitten 49 trägt an seiner Unterseite einen Mitnehmer 56.

Fig. 7 zeigt die Tütenrollvorrichtung 35 mit in Längsrichtung auseinandergezogener Rolleinheit. Der erste Schlitten 47 befindet sich in seiner hinteren Endstellung. Der erste Schlitten 47 liegt mit dem hinteren Schlittenteil 47b am hinteren Ende der Tütenrollvorrichtung 35 am Anschlag 48 an. Der zweite Schlitten 49 befindet sich ebenfalls in seiner hinteren Endstellung und ist weit hinter dem vorderen Schlittenteil 47a des ersten Schlittens 47 angeordnet. Der am zweiten Schlitten 49 angeordnete Rolldorn 39 ist hinter dem am vorderen Schlittenteil 47a des ersten Schlittens 47 angeordneten Tütenabstreifer 38 angeordnet.

Zum Zusammenschieben der Rolleinheit wird der zweite Schlitten 49 im Tragrahmen 36 nach vorne geschoben. Zuerst wird der zweite Schlitten 49 zum vorderen Schlittenteil 47a des ersten Schlittens 47 nach vorne geschoben. Dabei wird der Rolldorn 39 durch den Tütenabstreifer 38 hindurch nach vorne geschoben und das Bindeglied 53 geschlossen. Dann schiebt der zweite Schlitten 49 den ersten Schlitten 47 nach vorne. Dabei wird der über den Tütenabstreifer 38 nach vorne vorstehende Rolldorn 39 in die Rollform 37 eingeschoben.

Fig. 8 zeigt die Tütenrollvorrichtung 35 mit in Längsrichtung zusammengeschobener Rolleinheit. Der erste Schlitten 47 befindet sich in seiner vorderen Endstellung. Der Tütenabstreifer 38 ist vor der Rollform 37 angeordnet. Der zweite Schlitten 49 befindet sich ebenfalls in seiner vorderen Endstellung. Der Rolldorn 39 ragt durch den Tütenabstreifer 38 hindurch in die Rollform 37 hinein. Auf dem Rolldorn 39 ist die in der Rollform 37 entstandene Tüte angeordnet. Der Tütenabstreifer 38 ist hinter der Tüte angeordnet. Das Bindeglied 53 ist geschlossen und der erste Schlitten 47 ist mit dem zweiten Schlitten 49 durch das Bindeglied 53 gekoppelt.

Zum Auseinanderziehen der Rolleinheit wird der zweite Schlitten 49 im Tragrahmen 36 nach hinten geschoben.

Im ersten Teil seiner Rückwärtsbewegung nimmt der zweite Schlitten 49 den mit ihm durch das Bindeglied 53 gekoppelten, ersten Schlitten 47 mit. Beide Schlitten 47 und 49 werden gemeinsam nach hinten geschoben. Der Rolldorn 39 wird samt der Tüte vollständig aus der Rollform 37 herausgezogen und der Tütenabstreifer 38 bleibt in seiner Position hinter der Tüte.

Am Beginn des zweiten Teiles der Rückwärtsbewegung des zweiten Schlittens 49 stößt der vom zweiten Schlitten 49 nach hinten geschobene, erste Schlitten 47 mit seinem hinteren Schlittenteil 47b gegen den am hinteren Ende der Tütenrollvorrichtung 35 angeordneten Anschlag 48. Dadurch wird der erste Schlitten 47 in der Tütenrollvorrichtung 35 still gesetzt und das Bindeglied 53 wird gelöst.

Im zweiten Teil seiner Rückwärtsbewegung bewegt sich der zweite Schlitten 49 von dem vorderen Schlittenteil 47a des ersten Schlittens 47 weg nach hinten zu dem hinteren Schlittenteil 47b des ersten Schlittens 47. Dabei wird der Rolldorn 39 durch den hinter der Tüte angeordneten Tütenabstreifer 38 hindurch nach hinten gezogen und der Tütenabstreifer 38 streift die Tüte vom Rolldorn 39 ab. Die Tüte fällt nach unten aus der Tütenrollvorrichtung 35.

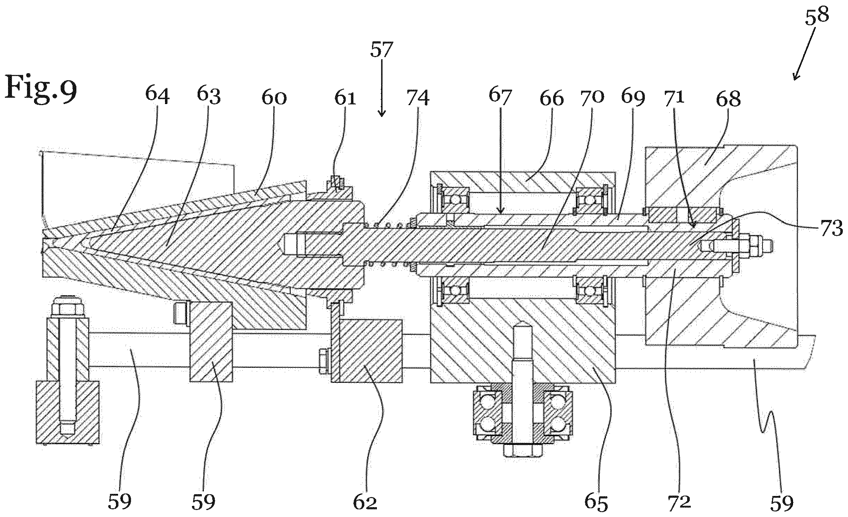

Fig. 9 zeigt die in Längsrichtung zusammengeschobene Rolleinheit 57 einer Tütenrollvorrichtung 58. Die Tütenrollvorrichtung 58 besitzt einen sich in Längsrichtung der Tütenrollvorrichtung 58 erstreckenden Tragrahmen 59. Die Rollform 60 ist am vorderen Ende der Tütenrollvorrichtung 58 angeordnet und mit dem Tragrahmen 59 starr verbunden. Vor der Rollform 60 ist der Tütenabstreifer 61 angeordnet. Der Tütenabstreifer 61 sitzt auf einem längs dem Tragrahmen 59 verschiebbaren, ersten Schlitten 62. Der Rolldorn 63 ragt durch den Tütenabstreifer 61 hindurch in die Rollform 60 hinein. In der Rollform 60 ist zwischen der Rollform 60 und dem Rolldorn 63 eine Tüte 64 angeordnet. Der Rolldorn 63 ist auf einem längs dem Tragrahmen 59 verschiebbaren, zweiten Schlitten 65 angeordnet.

Der zweite Schlitten 65 ist mit einem Lagerbock 66 versehen, in dem eine horizontal ausgerichtete Rolldornwelle 67 drehbar gelagert ist. Der Rolldorn 63 ist am vorderen Ende der Rolldornwelle 67 angeordnet. Das Rolldorn-Antriebsrad 68 ist am hinteren Ende der Rolldornwelle 67 angeordnet.

Die Rolldornwelle 67 ist als eine axial in sich zusammenschiebbare Rolldornwelle ausgebildet.

Die Rolldornwelle 67 sieht eine äußere Hülse 69 vor, die das Rolldorn-Antriebsrad 68 trägt und im Lagerbock 66 drehbar, aber axial unverschieblich gelagert ist. Die Rolldornwelle 67 sieht eine den Rolldorn 63 tragende, innere Welle 70 vor, die im Innenraum der äußeren Hülse 69 angeordnet und gegenüber der äußeren Hülse 69 axial verschiebbar ist. Die Rolldornwelle 67 enthält eine die äußere Hülse 69 mit der inneren Welle 70 mechanisch verbindende Polygon-Kupplung 71, die im hinteren Teil der Rolldornwelle 67 angeordnet ist.

Die Polygon-Kupplung 71 sieht einen vom hinteren Endabschnitt der äußeren Hülse 69 gebildeten, äußeren Kupplungsabschnitt 72 vor, der an der Innenseite als Polygonhülse ausgebildet ist. Die Polygon-Kupplung 71 sieht einen vom hinteren Endabschnitt der innere Welle 70 gebildeten, inneren Kupplungsabschnitt 73 vor, der an der Außenseite als Polygonwelle ausgebildet ist. Der innere Kupplungsabschnitt 73 ist im äußeren Kupplungsabschnitt 72 formschlüssig aufgenommen und in Längsrichtung verschiebbar. Die beiden Kupplungsabschnitte 72, 73 der Polygon-Kupplung 71 können während der Drehmomentübertragung, d. h. unter Last, gegeneinander verschoben werden.

Beim zweiten Schlitten 65 wird das vom Rolldorn-Antriebsrad 68 an der äußeren Hülse 69 in die Rolldornwelle 67 eingebrachte Drehmoment über die Polygon-Kupplung 71 auf die in der äußeren Hülse 69 axial verschiebbare, innere Welle 70 übertragen, die am vorderen Ende den Rolldorn 63 trägt. Der Rolldorn 63 kann im zweiten Schlitten 65 während der Drehmomentübertragung horizontal hin und her bewegt werden, ohne den zweiten Schlitten 65 selbst zu verschieben. Beim horizontalen Verschieben des Rolldorns 63 wird nur die Rolldornwelle zusammengeschoben bzw. auseinandergezogen.

Der zweite Schlitten 65 kann beim Einrollen eines Waffelfladens in der vorderen Endstellung verbleiben, auch wenn es beim Einrollen des Waffelfladens zu einer Zunahme der Wandstärke der entstehenden Tüte kommt und der Rolldorn 63 geringfügig zurückweichen soll, um den Waffelfladen nicht plattzudrücken. Diese Rückwärtsbewegung des Rolldorns 63 wird von der axial in sich zusammenschiebbaren Rolldornwelle 67 aufgenommen. Die den Rolldorn 63 tragende, innere Welle 70 wird in der das Rolldorn-Antriebsrad 68 tragenden, äußeren Hülse 69 axial zurückgeschoben. Die Drehmomentübertragung von der äußeren Hülse 69 auf die innere Welle 70 wird durch die Polygon-Kupplung 71 unverändert aufrechterhalten.

Der Rolldorn 63 ist an der äußeren Hülse 69 der Rolldornwelle 67 durch eine Schraubenfeder 74 federnd abgestützt. Die Schraubenfeder 74 ist auf der inneren Welle 70 zwischen dem den Rolldorn 63 tragenden, vorderen Endabschnitt der inneren Welle 70 und dem vorderen Ende der äußeren Hülse 69 angeordnet.

Die Schraubenfeder 74 bestimmt den Anpressdruck mit dem der Rolldorn 63 gegen den in die Rollform 60 eingezogenen Waffelfladen beim Einrollen zu einer Tüte angedrückt wird. Beim Herausziehen des Rolldorns 63 aus der Rollform 60 drückt die Schraubenfeder 74 den Rolldorn 63 zurück in seine Ausgangsstellung.

Bei der Maschine 1 der Fig. 1-4 laufen die Tütenrollvorrichtungen 5 in Längsrichtung der Maschine 1 um und während dieser Umlaufbewegung werden in den Tütenrollvorrichtungen 5 die zweiten Schlitten 13 in Querrichtung der Maschine 1 hin und her bewegt, um die Rolleinheiten der Tütenrollvorrichtungen 5 in Längsrichtung der Tütenrollvorrichtungen 5 auseinanderzuziehen bzw. zusammenzuschieben.

Die Tütenrollvorrichtungen 5 werden vom Endlosförderer 6 entlang der Umlaufbahn von der Eingabestation 3 zur Ausgabestation 7 und wieder zurück zur Eingabestation 3 befördert.

Bevor eine Tütenrollvorrichtung 5 die Eingabestation 3 erreicht, wird ihr zweiter Schlitten 13 nach vorne geschoben und ihre Rolleinheit in Längsrichtung zusammengeschoben. Beim Passieren der Eingabestation 3 befindet sich der zweite Schlitten 13 in seiner vorderen Endstellung und der auf dem zweiten Schlitten 13 angeordnete Rolldorn 14 wird zum Einrollen eines Waffelfladens in Rotation versetzt. Nach dem Einrollen des Waffelfladens wird die Tütenrollvorrichtung 5 zur Ausgabestation 7 befördert. In der Ausgabestation 7 wird der zweiten Schlitten 13 nach hinten verschoben, um die Rolleinheit in Längsrichtung auseinanderzuziehen und die Tüte aus der Tütenrollvorrichtung 5 auszugeben.

Der Rolldorn 14 ist am zweiten Schlitten 13 angeordnet. Der Rolldorn 14 ist am vorderen Ende einer Rolldornwelle angeordnet, die in einem am zweiten Schlitten 13 angeordneten Lagerbock drehbar gelagert ist und am hinteren Ende ein Rolldorn-Antriebsrad 75 trägt. Der Rolldorn 14 wird über das Rolldorn-Antriebsrad 75 angetrieben.

Der den Tütenabstreifer 12 tragende erste Schlitten 11 wird beim Verschieben des zweiten Schlittens 13 mit dem zweiten Schlitten 13 passiv mitbewegt.

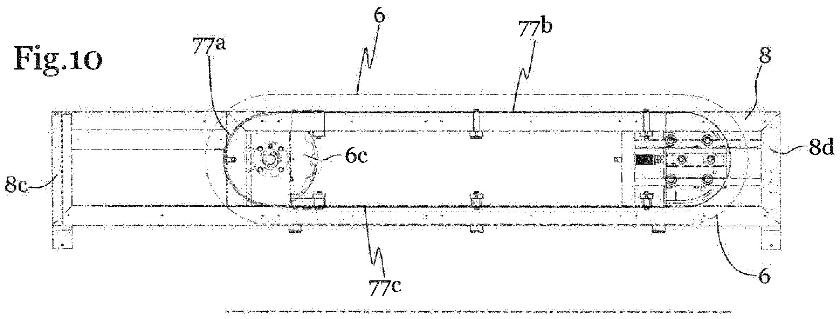

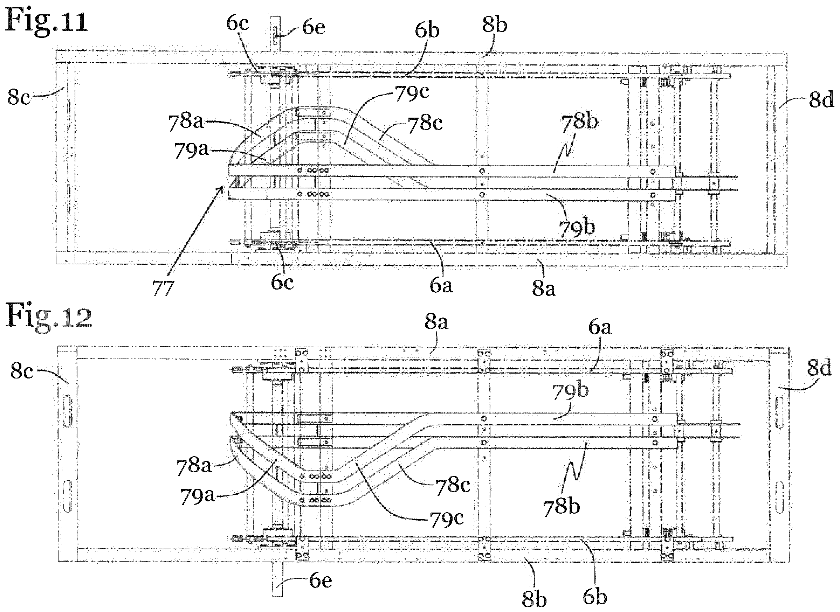

Der zweite Schlitten 13 wird mit Hilfe eines an seiner Unterseite angebrachten Mitnehmers 76 im Tragrahmen 9 der Tütenrollvorrichtung 5 in Längsrichtung hin und her bewegt. Der Mitnehmer 76 greift in eine entlang der Umlaufbahn angeordnete Führungseinrichtung 77 ein. Die Führungseinrichtung steuert im Zusammenwirken mit dem Mitnehmer 76 die Position des zweiten Schlittens 13 in der Tütenrollvorrichtung 5, während diese vom Endlosförderer 6 in Längsrichtung des Maschinengestells 8 vorwärts bewegt wird. Siehe dazu auch die Figuren 10 bis 12.

Durch den in die Führungseinrichtung 77 eingreifenden Mitnehmer 76 wird der zweite Schlitten 13 in der Tütenrollvorrichtung 5 nach vorne in seine vordere Endstellung geschoben, dann in der vorderen Endstellung gehalten und dann in seine hintere Endstellung nach hinten geschoben.

Die Führungseinrichtung 77 enthält einen, die Vorwärtsbewegung des zweiten Schlittens 13 erzeugenden, ersten Führungsabschnitt 77a, einen den zweiten Schlitten 13 in der vorderen Endstellung haltenden, zweiten Führungsabschnitt 77b und einen, die Rückwärtsbewegung des zweiten Schlittens 13 erzeugenden, dritten Führungsabschnitt 77c.

Die Führungseinrichtung 77 ist entlang der Innenseite der Umlaufbahn und im Abstand von der Umlaufbahn angeordnet. Die drei Führungsabschnitte 77a, 77b, 77c sind entlang der Umlaufbahn hintereinander angeordnet. Die Führungseinrichtung 77 sieht zwei parallel zueinander angeordnete Führungsschienen 78, 79 vor, zwischen denen die an den zweiten Schlitten 13 angebrachten Mitnehmer 76 angeordnet sind. Die beiden Führungsschienen 78, 79 sind am Maschinengestell 8 befestigt.

Der erste Führungsabschnitt 77a ist an der Umlaufbahn der Tütenrollvorrichtungen 5 vor der Eingabestation 3 der Maschine 1 angeordnet. Der erste Führungsabschnitt 77a erstreckt sich vom unteren, horizontalen Bahnabschnitt der Umlaufbahn entlang dem vorderen halbkreisförmigen Bahnabschnitt der Umlaufbahn zum oberen horizontalen Bahnabschnitt der Umlaufbahn. Im ersten Führungsabschnitt 77a sind im Maschinengestell 8 schräg verlaufende, bogenförmige Führungsschienen 78a, 79a vorgesehen. Die Führungsschienen 78a, 79a erstrecken sich in Querrichtung des Maschinengestells 8 von der hinteren Transportkette 6b des Endlosförderers 6 schräg nach vorne zur vorderen Transportkette 6a des Endlosförderers 6.

Wenn eine Tütenrollvorrichtung 5 in Längsrichtung des Maschinengestells 8 durch den vorderen halbkreisförmigen Bahnabschnitt der Umlaufbahn befördert wird, dann wird der zweite Schlitten 13 durch den in den ersten Führungsabschnitt 77a eingreifenden Mitnehmer 76 in Querrichtung des Maschinengestells 8 nach vorne geschoben und die Rolleinheit der Tütenrollvorrichtung 5 wird in Längsrichtung zusammengeschoben.

Der zweite Führungsabschnitt 77b erstreckt sich entlang Umlaufbahn von der Eingabestation 3 der Maschine 1 bis zur Ausgabestation 7 der Maschine 1. Im zweiten Führungsabschnitt 77b sind zur Längsrichtung des Maschinengestells 8 parallele Führungsschienen 78b, 79b vorgesehen.

Wenn eine Tütenrollvorrichtung 5 in Längsrichtung des Maschinengestells 8 von der Eingabestation 3 zur Ausgabestation 7 befördert wird, dann bleibt der zweite Schlitten 13 durch den in den zweiten Führungsabschnitt 77a eingreifenden Mitnehmer 76 in seiner vorderen Endstellung.

Der dritte Führungsabschnitt 77c ist in der am unteren, horizontalen Bahnabschnitt der Umlaufbahn angeordneten Ausgabestation 7 angeordnet. Im dritten Führungsabschnitt 77c sind im Maschinengestell 8 schräg verlaufende, ebene Führungsschienen 78c, 79c vorgesehen. Die Führungsschienen 78c, 79c erstrecken sich in Querrichtung des Maschinengestells 8 von der vorderen Transportkette 6a des Endlosförderers 6 schräg nach hinten zur hinteren Transportkette 6b des Endlosförderers 6.

Wenn eine Tütenrollvorrichtung 5 in Längsrichtung des Maschinengestells 8 durch Ausgabestation 7 befördert wird, dann wird der zweite Schlitten 13 durch den in den dritten Führungsabschnitt 77c eingreifenden Mitnehmer 76 in Querrichtung des Maschinengestells 8 nach hinten geschoben und die Rolleinheit der Tütenrollvorrichtung 5 wird in Längsrichtung auseinandergezogen und die Tüte fällt nach unten aus der Tütenrollvorrichtung 5.

Wenn die Tütenrollvorrichtungen 5 die Eingabestation 3 der Maschine 1 passieren, werden die auf den zweiten Schlitten 13 angeordneten Rolldorne 14 zum Einrollen der Waffelfladen in Rotation versetzt. Dies geschieht durch eine im Bereich der Eingabestation 3 angeordnete, am Maschinengestell 8 befestigte Antriebseinrichtung 80. Die Antriebseinrichtung 80 sieht einen Antriebsmotor 81 vor, der einen Riementrieb 82 antreibt. Der Riementrieb 82 sieht einen endlosen Riemen 83 vor, der sich in Längsrichtung des Maschinengestells 8 erstreckt und parallel zur Umlaufbahn der Tütenrollvorrichtungen 5 angeordnet ist. Der Riemen 83 ist entlang der oberen Hälfte des vorderen halbkreisförmigen Bahnabschnitts der Umlaufbahn angeordnet und erstreckt sich durch die Eingabestation 3 hindurch bis zum oberen horizontalen Bahnabschnitt der Umlaufbahn.

Wenn eine Tütenrollvorrichtung 5 den vorderen halbkreisförmigen Bahnabschnitt der Umlaufbahn passiert, kommt das Rolldorn-Antriebsrad 75 mit dem in Längsrichtung des Maschinengestell 8 umlaufenden Riemen 83 in Eingriff. Der Riemen 83 treibt über das Rolldorn-Antriebsrad 75 den Rolldorn 13 an. Die Tütenrollvorrichtung 5 wird mit rotierendem Rolldorn 13 durch die Eingabestation 3 der Maschine 1 befördert. In der Eingabestation 3 wird ein Waffelfladen über die schräg stehende Platte 10a in die Rollform 10 eingeführt und in der Rollform 10 durch den rotierenden Rolldorn 13 zu einer Tüte eingerollt.

### Bezugszeichenliste:

- 1.: Maschine
- 2.: Untergestell
- 3.: Eingabestation
- 4.: Waffelfladen
- 5.: Tütenrollvorrichtung
- 6.: Endlosförderer
- 6a.: vordere Transportkette
- 6b.: hintere Transportkette
- 6c.: Umlenkräder
- 6d.: Umlenkrad
- 6e.: Antriebswelle
- 7.: Ausgabestation
- 8.: Maschinengestell
- 8a.: vordere Seitenwand
- 8b.: hintere Seitenwand
- 8c.: linke Endwand
- 8d.: rechte Endwand
- 9.: Tragrahmen
- 10.: Rollform
- 10a.: Platte
- 11.: erster Schlitten [Fig. 1-4]
- 12.: Tütenabstreifer
- 13.: zweiter Schlitten [Fig. 1-4]
- 14.: Rolldorn
- 15.: Tütenrollvorrichtung [Fig. 5-6]
- 16.: Tragrahmen
- 17.: Stäbe
- 18.: Stäbe
- 19.: erstes Querstück
- 20.: zweites Querstück
- 21.: Transportkette
- 22.: Transportkette
- 23.: Rollform
- 23a.: (schräg stehende) Platte
- 24.: Querstück
- 25.: Tütenabstreifer
- 26.: erster Schlitten
- 26a.: vorderer Schlittenteil
- 26b.: hinterer Schlittenteil
- 26c.: Distanzstange
- 27.: Rolldorn
- 28.: zweiter Schlitten
- 28a.: (horizontale) Längsbohrung
- 29.: Rolldornwelle
- 30.: Lagerbock
- 31.: Rolldorn-Antriebsrad
- 32.: Anschlag
- 33.: Schraubenfeder
- 34.: Mitnehmer
- 35.: Tütenrollvorrichtung [Fig. 7-8]
- 36.: Tragrahmen
- 37.: Rollform
- 37a.: Platte
- 38.: Tütenabstreifer
- 39.: Rolldorn
- 40.: Transportkette
- 41.: Transportkette
- 42.: Stäbe
- 43.: Stäbe
- 44.: erstes Querstück
- 45.: zweites Querstück
- 46.: drittes Querstück
- 47.: erster Schlitten
- 47a.: vorderer Schlittenteil
- 47b.: hinterer Schlittenteil
- 47c.: Distanzstange
- 48.: Anschlag
- 49.: zweiter Schlitten
- 49a.: Längsbohrung
- 50.: Rolldornwelle
- 51.: Lagerbock
- 52.: Rolldorn-Antriebsrad
- 53.: Bindeglied
- 54.: Magnet
- 55.: Gegenstück
- 56.: Mitnehmer
- 57.: Rolleinheit [Fig. 9]
- 58.: Tütenrollvorrichtung
- 59.: Tragrahmen
- 60.: Rollform
- 61.: Tütenabstreifer
- 62.: erster Schlitten
- 63.: Rolldorn
- 64.: Tüte
- 65.: zweiter Schlitten
- 66.: Lagerbock
- 67.: Rolldornwelle
- 68.: Rolldorn-Antriebsrad
- 69.: äußere Hülse
- 70.: innere Welle
- 71.: Polygon-Kupplung
- 72.: äußerer Kupplungsabschnitt
- 73.: innerer Kupplungsabschnitt
- 74.: Schraubenfeder
- 75.: Rolldorn-Antriebsrad [Fig. 1-4]
- 76.: Mitnehmer
- 77.: Führungseinrichtung
- 77a.: erster Führungsabschnitt
- 77b.: zweiter Führungsabschnitt
- 77c.: dritter Führungsabschnitt
- 78.: Führungsschienen
- 78a.: Führungsschienen
- 78b.: Führungsschienen
- 78c.: Führungsschienen
- 79.: Führungsschienen
- 79a.: Führungsschienen
- 79b.: Führungsschienen
- 79c.: Führungsschienen
- 80.: Antriebseinrichtung
- 81.: Antriebsmotor
- 82.: Riementrieb
- 83.: Riemen

## Patentansprüche

1. Maschine mit horizontal ausgerichteten Tütenrollvorrichtungen (5, 15, 35, 58) zum Herstellen von gerollten Waffeltüten, wobei die Maschine (1) ein langgestrecktes Maschinengestell (8) besitzt, in dem die Tütenrollvorrichtungen (5, 15, 35, 58) längs einer sich in Längsrichtung des Maschinengestells (8) erstreckenden Umlaufbahn hintereinander angeordnet sind, wobei die Maschine (1) einen entlang der Umlaufbahn angeordneten, die Tütenrollvorrichtungen (5, 15, 35, 58) tragenden Endlosförderer (6) besitzt, der die Tütenrollvorrichtungen (5, 15, 35, 58) entlang der Umlaufbahn von der an der Maschinenoberseite angeordneten Eingabestation (3) zu der an der Maschinenunterseite angeordneten Ausgabestation (7) befördert, wobei der Endlosförderer (6) an den Seitenrändern der Umlaufbahn angeordnete Transportketten (6a, 6b, 21, 22, 40, 41) besitzt, an denen die Tragrahmen (9, 16, 36, 59) der Tütenrollvorrichtungen (5, 15, 35, 58) befestigt sind, **dadurch gekennzeichnet, dass** jede Tütenrollvorrichtung (5, 15, 35, 58) eine mit ihrem Tragrahmen (9, 16, 36, 59) starr verbundene Rollform (10, 23, 37, 60), einen längs ihrem Tragrahmen (9, 16, 36, 59) verschiebbaren Tütenabstreifer (12, 25, 38, 61) und einen längs ihrem Tragrahmen verschiebbaren Rolldorn (14, 27, 39, 63) besitzt, wobei die Rollform (10, 23, 37, 60) an einem seitlichen Endabschnitt des Tragrahmens (9, 16, 36, 59) angeordnet ist, der Tütenabstreifer (12, 25, 38, 61) auf einem längs dem Tragrahmen (9, 16, 36, 59) verschiebbaren, ersten Schlitten (11, 26, 47, 62) angeordnet ist und der Rolldorn (14, 27, 39, 63) auf einem längs dem Tragrahmen (9, 16, 36, 59) verschiebbaren, zweiten Schlitten (13, 28, 49, 65) angeordnet ist.

2. Maschine nach Anspruch 1, **dadurch gekennzeichnet, dass** eine am zweiten Schlitten (28, 49, 65) in einem Lagerbock (30, 51, 66) drehbar gelagerte Rolldornwelle (29, 50, 67) vorgesehen ist, die am vorderen Ende den Rolldorn (27, 39, 63) und am hinteren Ende ein Rolldorn-Antriebsrad (31, 52, 68) trägt.

3. Maschine nach Anspruch 2, **dadurch gekennzeichnet, dass** die Rolldornwelle (67) als axial in sich zusammenschiebbare Rolldornwelle (67) ausgebildet ist, wobei die Rolldornwelle (67) eine das Rolldorn-Antriebsrad (68) tragende, im Lagerbock (66) drehbar, aber axial unverschieblich gelagerte äußere Hülse (69), eine in der äußeren Hülse (69) axial verschiebbare, den Rolldorn (63) tragende innere Welle (70) und eine die äußere Hülse (69) mit der inneren Welle (70) mechanisch verbindende Polygon-Kupplung (71) umfasst.

4. Maschine nach Anspruch 3, **dadurch gekennzeichnet, dass** die Polygon-Kupplung (71) im hinteren Teil der Rolldornwelle (67) angeordnet ist, wobei ein von der inneren Welle (70) gebildeter, innerer Kupplungsabschnitt (73), der an der Außenseite als Polygonwelle ausgebildet ist, in einem von der äußeren Hülse (69) gebildeten, äußeren Kupplungsabschnitt (72), der an der Innenseite als Polygonhülse ausgebildet ist, formschlüssig aufgenommen ist.

5. Maschine nach Anspruch 3 oder 4, **dadurch gekennzeichnet, dass** der an der inneren Welle (70) der Rolldornwelle (67) befestigte Rolldorn (63) an der äußeren Hülse (69) der Rolldornwelle (67) federnd abgestützt ist.

6. Maschine nach Anspruch 5, **dadurch gekennzeichnet, dass** der an der inneren Welle (70) der Rolldornwelle (67) befestigte Rolldorn (63) über eine Schraubenfeder (74) an der äußeren Hülse (69) der Rolldornwelle (67) federnd abgestützt ist.

7. Maschine nach Anspruch 6, **dadurch gekennzeichnet, dass** die Schraubenfeder (33, 74) zwischen der Rückseite des Rolldorns (14, 27, 39, 63) und dem vorderen Ende der äußeren Hülse der Rolldornwelle (29, 50, 67) angeordnet ist.

8. Maschine nach Anspruch 6, **dadurch gekennzeichnet, dass** die Schraubenfeder (74) zwischen einem den Rolldorn (63) tragenden, vorderen Endabschnitt der inneren Welle (70) der Rolldornwelle (67) und dem vorderen Ende der äußeren Hülse (69) der Rolldornwelle (67) angeordnet ist.

9. Maschine nach einem der Ansprüche 1-8, **dadurch gekennzeichnet, dass** der den Rolldorn (14, 27, 39, 63) tragende, zweite Schlitten (13, 28, 49, 65) mit einem Mitnehmer (34, 56, 76) versehen ist, der mit einer im Maschinengestell (8) entlang der Umlaufbahn angeordneten Führungseinrichtung (77) in Eingriff bringbar ist, die zusammen mit dem Mitnehmer (34, 56, 76) die Position des zweiten Schlittens (13, 28, 49, 65) in der Tütenrollvorrichtung (5, 15, 35, 58) steuert.

10. Maschine nach Anspruch 9, **dadurch gekennzeichnet, dass** die Führungseinrichtung (77) zwei zueinander parallele Führungsschienen (78, 79; 78a, 78b, 78c, 79a, 79b, 79c) vorsieht, zwischen denen der am zweiten Schlitten (13, 28, 49, 65) angebrachte Mitnehmer (34, 56, 76) angeordnet ist, dass ein der Eingabestation (3) vorgelagerter Führungsabschnitt (77a) vorgesehen ist, der mit im Maschinengestell schräg verlaufenden Führungsschienen (78a, 79a) versehen ist, die zusammen mit dem am zweiten Schlitten (13, 28, 49, 65) angebrachten Mitnehmer (34, 56, 76) eine den Rolldorn (14, 27, 39, 63) in die Rollform (10, 23, 37, 60) einführende Vorwärtsbewegung des zweiten Schlittens (13, 28, 49, 65) erzeugt, und dass ein im Bereich der Ausgabestation (7) angeordneter Führungsabschnitt (77c) vorgesehen ist, der mit im Maschinengestell (8) schräg verlaufenden Führungsschienen (78c, 79c) versehen ist, die zusammen mit dem am zweiten Schlitten (13, 28, 49, 65) angebrachten Mitnehmer (34, 56, 76) eine den Rolldorn (14, 27, 39, 63) aus der Rollform (10, 23, 37, 60) herausziehende Rückwärtsbewegung des zweiten Schlittens (13, 28, 49, 65) erzeugt.

11. Maschine nach einem der Ansprüche 1-10, **dadurch gekennzeichnet, dass** ein mit dem zweiten Schlitten (28) passiv mitbewegbarer, erster Schlitten (26) vorgesehen ist, dass der erste Schlitten (26) einen vor dem zweiten Schlitten (28) angeordneten, den Tütenabstreifer (25) tragenden, vorderen Schlittenteil (26a) und einen hinter dem zweiten Schlitten (28) angeordneten, hinteren Schlittenteil (26b) besitzt, dass beim ersten Schlitten (26) der vordere Schlittenteil (26a) im Abstand vom hinteren Schlittenteil (26b) angeordnet und mit diesem durch eine Distanzstange (26c) starr verbunden ist, dass der erste Schlitten (26) durch eine hinter dem zweiten Schlitten (28) angeordnete Schraubenfeder (33) mit dem zweiten Schlitten (28) gekoppelt ist, und dass am hinteren Ende des Tragrahmens (16) ein den Verschiebeweg des ersten Schlittens (26) begrenzender Anschlag (32) angeordnet ist.

12. Maschine nach einem der Ansprüche 1-10, **dadurch gekennzeichnet, dass** ein mit dem zweiten Schlitten (49) passiv mitbewegbarer, erster Schlitten (47) vorgesehen ist, dass der erste Schlitten (47) einen vor dem zweiten Schlitten (49) angeordneten, den Tütenabstreifer (39) tragenden, vorderen Schlittenteil (47a) und einen hinter dem zweiten Schlitten (49) angeordneten, hinteren Schlittenteil (47b) besitzt, dass beim ersten Schlitten (47) der vordere Schlittenteil (47a) im Abstand vom hinteren Schlittenteil (47b) angeordnet und mit diesem durch eine Distanzstange (47c) starr verbunden ist, dass der erste Schlitten (47) über ein lösbares Bindeglied (53) mit dem zweiten Schlitten (49) gekoppelt ist, und dass am hinteren Ende des Tragrahmens (36) ein den Verschiebeweg des ersten Schlittens (47) begrenzender Anschlag (48) angeordnet ist.

13. Maschine nach Anspruch 12, **dadurch gekennzeichnet, dass** der erste Schlitten (47) über ein lösbares Bindeglied (53) mit dem zweiten Schlitten (49) gekoppelt ist, wobei das Bindeglied (53) aus einem an der Vorderseite des zweiten Schlittens (49) angebrachten Magneten (54) und einem an der Rückseite des vorderen Schlittenteils (47a) des ersten Schlittens (47) angebrachten Gegenstück (55) besteht.

## Claims

1. A machine comprising horizontally aligned cone rolling devices (5, 15, 35, 58) for producing rolled wafer cones, wherein the machine (1) has an elongated machine frame (8), the cone rolling devices (5, 15, 35, 58) being arranged therein consecutively along a circumferential path extending in the longitudinal direction of the machine frame (8), wherein the machine (1) has an endless conveyor (6) arranged along the circumferential path and bearing the cone rolling devices (5, 15, 35, 58), said endless conveyor conveying the cone rolling devices (5, 15, 35, 58) along the circumferential path from the input station (3) arranged on the machine upper face to the output station (7) arranged on the machine lower face, wherein the endless conveyor (6) has transport chains (6a, 6b, 21, 22, 40, 41) arranged on the side edges of the circumferential path, the supporting frames (9, 16, 36, 59) of the cone rolling devices (5, 15, 35, 58) being fastened thereto,
**characterised in that** each cone rolling device (5, 15, 35, 58) has a rolling mould (10, 23, 37, 60) rigidly connected to its supporting frame (9, 16, 36, 59), a cone scraper (12, 25, 38, 61) which is displaceable along its supporting frame (9, 16, 36, 59) and a rolling mandrel (14, 27, 39, 63) which is displaceable along its supporting frame, wherein the rolling mould (10, 23, 37, 60) is arranged on a lateral end portion of the supporting frame (9, 16, 36, 59), the cone scraper (12, 25, 38, 61) is arranged on a first carriage (11, 26, 47, 62) which is displaceable along the supporting frame (9, 16, 36, 59) and the rolling mandrel (14, 27, 39, 63) is arranged on a second carriage (13, 28, 49, 65) which is displaceable along the supporting frame (9, 16, 36, 59).

2. The machine according to Claim 1, **characterised in that** a rolling mandrel shaft (29, 50, 67) is provided so as to be rotatably mounted on the second carriage (28, 49, 65) in a bearing block (30, 51, 66) and which at the front end bears the rolling mandrel (27, 39, 63) and at the rear end bears a rolling mandrel drive wheel (31, 52, 68).

3. The machine according to Claim 2, **characterised in that** the rolling mandrel shaft (67) is configured as a rolling mandrel shaft (67) which is able to be pushed together axially into itself, wherein the rolling mandrel shaft (67) comprises an outer sleeve (69) which bears the rolling mandrel drive wheel (68) and which is rotatably but axially undisplaceably mounted in the bearing block (66), an inner shaft (70) which is axially displaceable in the outer sleeve (69) and which bears the rolling mandrel (63), and a polygonal coupling (71) mechanically connecting the outer sleeve (69) to the inner shaft (70).

4. The machine according to Claim 3, **characterised in that** the polygonal coupling (71) is arranged in the rear part of the rolling mandrel shaft (67), wherein an inner coupling portion (73), which is formed by the inner shaft (70) and which is configured on the outer face as a polygonal shaft, is positively received in an outer coupling portion (72) which is formed by the outer sleeve (69) and which is configured on the inner face as polygonal sleeve.

5. The machine according to Claim 3 or 4, **characterised in that** the rolling mandrel (63) which is fastened to the inner shaft (70) of the rolling mandrel shaft (67) is resiliently supported on the outer sleeve (69) of the rolling mandrel shaft (67).

6. The machine according to Claim 5, **characterised in that** the rolling mandrel (63) which is fastened to the inner shaft (70) of the rolling mandrel shaft (67) is resiliently supported via a helical spring (74) on the outer sleeve (69) of the rolling mandrel shaft (67).

7. The machine according to Claim 6, **characterised in that** the helical spring (33, 74) is arranged between the rear face of the rolling mandrel (14, 27, 39, 63) and the front end of the outer sleeve of the rolling mandrel shaft (29, 50, 67).

8. The machine according to Claim 6, **characterised in that** the helical spring (74) is arranged between a front end portion of the inner shaft (70) of the rolling mandrel shaft (67) bearing the rolling mandrel (63) and the front end of the outer sleeve (69) of the rolling mandrel shaft (67).

9. The machine according to one of Claims 1 - 8, **characterised in that** the second carriage (13, 28, 49, 65) bearing the rolling mandrel (14, 27, 39, 63) is provided with a carrier (34, 56, 76) which is able to be brought into engagement with a guide device (77) which is arranged in the machine frame (8) along the circumferential path and which together with the carrier (34, 56, 76) controls the position of the second carriage (13, 28, 49, 65) in the cone rolling device (5, 15, 35, 58).

10. The machine according to Claim 9, **characterised in that** the guide device (77) provides two guide rails parallel to one another (78, 79; 78a, 78b, 78c, 79a, 79b, 79c), the carrier (34, 56, 76) attached to the second carriage (13, 28, 49, 65) being arranged therebetween, **in that** a guide portion (77a) mounted upstream of the input station (3) is provided, said guide portion being provided with guide rails (78a, 79a) extending obliquely in the machine frame, said guide rails together with the carrier (34, 56, 76) attached to the second carriage (13, 28, 49, 65) producing a forward movement of the second carriage (13, 28, 49, 65) introducing the rolling mandrel (14, 27, 39, 63) into the rolling mould (10, 23, 37, 60), and **in that** a guide portion (77c) arranged in the region of the output station (7) is provided, said guide portion being provided with guide rails (78c, 79c) extending obliquely in the machine frame (8), said guide rails together with the carrier (34, 56, 76) attached to the second carriage (13, 28, 49, 65) producing a rearward movement of the second carriage (13, 28, 49, 65) pulling the rolling mandrel (14, 27, 39, 63) out of the rolling mould (10, 23, 37, 60).

11. The machine according to one of Claims 1 - 10, **characterised in that** a first carriage (26) which is able to be passively entrained with the second carriage (28) is provided, **in that** the first carriage (26) has a front carriage part (26a) arranged upstream of the second carriage (28) and bearing the cone scraper (25), and a rear carriage part (26b) arranged downstream of the second carriage (28), **in that** in the first carriage (26) the front carriage part (26a) is arranged spaced apart from the rear carriage part (26b) and is rigidly connected thereto by a spacer rod (26c), **in that** the first carriage (26) is coupled to the second carriage (28) by a helical spring (33) arranged downstream of the second carriage (28), and **in that** a stop (32) limiting the displacement path of the first carriage (26) is arranged on the rear end of the supporting frame (16).

12. The machine according to one of Claims 1 - 10, **characterised in that** a first carriage (47) which is able to be passively entrained with the second carriage (49) is provided, **in that** the first carriage (47) has a front carriage part (47a) arranged upstream of the second carriage (49) and bearing the cone scraper (39), and a rear carriage part (47b) arranged downstream of the second carriage (49), **in that** in the first carriage (47) the front carriage part (47a) is arranged spaced apart from the rear carriage part (47b) and is rigidly connected thereto by a spacer rod (47c), **in that** the first carriage (47) is coupled to the second carriage (49) via a releasable binding member (53), and **in that** a stop (48) limiting the displacement path of the first carriage (47) is arranged on the rear end of the supporting frame (36).

13. The machine according to Claim 12, **characterised in that** the first carriage (47) is coupled to the second carriage (49) via a releasable binding member (53), wherein the binding member (53) consists of a magnet (54) attached to the front face of the second carriage (49) and a counterpiece (55) attached to the rear face of the front carriage part (47a) of the first carriage (47).

## Revendications

1. Machine avec des dispositifs d'enroulement de cornets en gaufrette (5,15,35,58) orientés horizontalement pour fabriquer des cornets en gaufrette enroulés, la machine (1) possédant un châssis de machine (8) allongé, dans lequel les dispositifs d'enroulement de cornets (5,15,35,58) sont disposés les uns derrière les autres le long d'une voie de circulation s'étendant dans le sens longitudinal du châssis de machine (8), la machine (1) possédant un convoyeur continu (6) disposé le long de la voie de circulation, portant les dispositifs d'enroulement de cornets (5,15,35,58), qui transporte les dispositifs d'enroulement de cornets (5,15,35,58) le long de la voie de circulation du poste d'entrée (3) disposé sur la face supérieure de la machine au poste de sortie (7) disposé sur la face inférieure de la machine, le convoyeur continu (6) possédant des chaînes de transport (6a,6b,21,22,40,41) disposées sur les bords latéraux de la voie de circulation, sur lesquelles sont fixés les bras de support (9,16,36,59) des dispositifs d'enroulement de cornets (5,15,35,58), **caractérisée en ce que** chaque dispositif d'enroulement de cornets (5,15,35,58) possède une forme d'enroulement (10,23,37,60) reliée fermement à leur cadre porteur (9,16,36,59), un extracteur de cornets (12,25,38,61) coulissant le long de leur cadre porteur (9,16,36,59) et un mandrin d'enroulement (14,27,39,63) coulissant le long de leur cadre porteur, la forme d'enroulement (10,23,37,60) étant disposée sur une section finale latérale du cadre porteur (9,16,36,59), l'extracteur de cornets (12,25,38,61) étant disposé sur un premier chariot (11,26,47,62) coulissant le long du cadre porteur (9,16,36,59) et le mandrin d'enroulement (14,27,39,63) étant disposé sur un deuxième chariot (13,28,49,65) coulissant le long du cadre porteur (9,16,36,59).

2. Machine selon la revendication 1, **caractérisée en ce qu'**un arbre de mandrin d'enroulement (29,50,67) logé pouvant tourner dans un support palier (30,51,66) sur le deuxièmes chariot (28,49,65) est prévu, qui supporte à l'extrémité avant le mandrin d'enroulement (27,39,63) et à l'extrémité arrière une roue d'entraînement de mandrin d'enroulement (31,52,68).

3. Machine selon la revendication 2, **caractérisée en ce que** l'arbre de mandrin d'enroulement (67) est constitué sous la forme d'un arbre de mandrin d'enroulement (67) axialement télescopique, l'arbre de mandrin d'enroulement (67) comprenant un manchon (69) extérieur mais logé axialement fixe, supportant la roue d'entraînement de mandrin d'enroulement (68), pouvant tourner dans le support palier (66), un arbre (70) intérieur axialement coulissant dans le manchon extérieur (69), supportant le mandrin d'enroulement (63) et un accouplement polygonal (71) reliant mécaniquement le manchon extérieur (69) à l'arbre intérieur (70).

4. Machine selon la revendication 3, **caractérisée en ce que** l'accouplement polygonal (71) est disposé dans la partie arrière de l'arbre de mandrin d'enroulement (67), une section d'accouplement (73) intérieure formée par l'arbre intérieur (70), constituée sur la face extérieure en tant qu'arbre polygonal étant logée par conformité de forme dans une section d'accouplement (72) extérieure formée par le manchon extérieur (69), constituée sur la face intérieure en tant que manchon polygonal.

5. Machine selon la revendication 3 ou 4, **caractérisée en ce que** le mandrin d'enroulement (63) fixé sur l'arbre intérieur (70) de l'arbre de mandrin d'enroulement (67) est supporté de manière élastique sur le manchon extérieur (69) de l'arbre de mandrin d'enroulement (67).

6. Machine selon la revendication 5, **caractérisée en ce que** le mandrin d'enroulement (63) fixé sur l'arbre intérieur (70) de l'arbre de mandrin d'enroulement (67) est supporté de manière élastique par le biais d'un ressort hélicoïdal (74) sur le manchon extérieur (69) de l'arbre de mandrin d'enroulement (67).

7. Machine selon la revendication 6, **caractérisée en ce que** le ressort hélicoïdal (33,74) est disposé entre la face arrière du mandrin d'enroulement (14,27,39,63) et l'extrémité avant du manchon extérieur de l'arbre de mandrin d'enroulement (29,50,67).

8. Machine selon la revendication 6, **caractérisée en ce que** le ressort hélicoïdal (74) est disposé entre une section finale avant de l'arbre intérieur (70) de l'arbre de mandrin d'enroulement (67) portant le mandrin d'enroulement (63) et l'extrémité avant du manchon extérieur (69) de l'arbre de mandrin d'enroulement (67).

9. Machine selon l'une quelconque des revendications 1-8, **caractérisée en ce que** le deuxième chariot (13,28,49,65) portant le mandrin d'enroulement (14,27,39,63) est doté d'un entraîneur (34,56,76), qui peut être mis en prise avec un dispositif de guidage (77) disposé dans le châssis de la machine (8) le long de la voie de circulation, qui commande ensemble avec l'entraîneur (34,56,76) la position du deuxième chariot (13,28,49,65) dans le dispositif d'enroulement de cornets (5,15,35,58).

10. Machine selon la revendication 9, **caractérisée en ce que** le dispositif de guidage (77) prévoit deux rails de guidage (78,79;78a,78b,78c,79a,79b,79c) parallèles entre eux, entre lesquels est disposé l'entraîneur (34,56,76) monté sur le deuxième chariot (13,28,49,65), **en ce qu'**une section de guidage (77a) logée en amont du poste d'entrée (3) est prévue, qui est dotée de rails de guidage (78a,79a) passant en diagonale dans le châssis de la machine, qui génèrent ensemble avec l'entraîneur (34,56,76) monté sur le deuxième chariot (13,28,49,65) un mouvement d'avance du deuxième chariot (13,28,49,65) introduisant le mandrin d'enroulement (14,27,39,63) dans la forme d'enroulement (10,23,37,60) et **en ce qu'**une section de guidage (77c) disposée dans la zone du poste de sortie (7) est prévue, qui est dotée de rails de guidage (78c,79c) passant en diagonale dans le châssis de la machine (8), qui génèrent ensemble avec l'entraîneur (34,56,76) monté sur le deuxième chariot (13,28,49,65) un mouvement de recul du deuxième chariot (13,28,49,65) sortant le mandrin d'enroulement (14,27,39,63) de la forme d'enroulement (10,23,37,60).

11. Machine selon l'une quelconque des revendications 1-10, **caractérisée en ce qu'**un premier chariot (26) passivement associé en déplacement au deuxième chariot (28) est prévu, **en ce que** le premier chariot (26) possède une partie de chariot avant (26a) disposée avant le deuxième chariot (28), portant l'extracteur de cornets (25) et une partie de chariot arrière (26b) disposée derrière le deuxième chariot (28), **en ce que** pour le premier chariot (26) la partie de chariot avant (26a) est disposée à distance de la partie de chariot arrière (26b) et est reliée fermement à celle-ci par une barre entretoise (26c), **en ce que** le premier chariot (26) est couplé au deuxième chariot (28) par un ressort hélicoïdal (33) disposé derrière le deuxième chariot (28) et **en ce qu'**une butée (32) limitant la course du premier chariot (26) est disposée à l'extrémité arrière du cadre porteur (16).

12. Machine selon l'une quelconque des revendications 1-10, **caractérisée en ce qu'**un premier chariot (47) passivement associé en déplacement au deuxième chariot (49) est prévu, **en ce que** le premier chariot (47) possède une partie de chariot avant (47a) disposée avant le deuxième chariot (49), portant l'extracteur de cornets (39) et une partie de chariot arrière (47b) disposée derrière le deuxième chariot (49), **en ce que** pour le premier chariot (47) la partie de chariot avant (47a) est disposée à distance de la partie de chariot arrière (47b) et est reliée fermement à celle-ci par une barre entretoise (47c), **en ce que** le premier chariot (47) est couplé au deuxième chariot (49) par un organe de liaison amovible (53) et **en ce qu'**une butée (48) limitant la course du premier chariot (47) est disposée à l'extrémité arrière du cadre porteur (36).

13. Machine selon la revendication 12, **caractérisée en ce que** le premier chariot (47) est couplé au deuxième chariot (49) par un organe de liaison amovible (53), l'organe de liaison (53) étant composé d'un aimant (54) monté sur la face avant du deuxième chariot (49) et d'une contre-pièce (55) montée sur la face arrière de la partie de chariot avant (47a) du premier chariot (47).
